# EUROPEAN PATENT SPECIFICATION

(11) **EP 4 485 161 B1**
(45) Date of publication and mention of the grant of the patent: **24.06.2026**
(21) Application number: 23859212.5
(22) Date of filing: 23.08.2023
(51) Int. Cl.: G06F 3/04883, G06F 3/0485, G06F 3/038, G06F 9/451, G06F 3/14, H04N 21/422

(54) **INTERACTION EVENT PROCESSING METHOD AND APPARATUS**
VERFAHREN UND VORRICHTUNG ZUR VERARBEITUNG VON INTERAKTIONSEREIGNISSEN
PROCÉDÉ ET APPAREIL DE TRAITEMENT D'ÉVÉNEMENT D'INTERACTION

(30) Priority: 02.09.2022 CN 202211069768
(43) Date of publication of application: 01.01.2025
(73) Proprietor: Honor Device Co., Ltd., Shenzhen, Guangdong 518040 (CN)
(72) Inventor: TONG, Chen, Shenzhen, Guangdong 518040 (CN); SUN, Ke, Shenzhen, Guangdong 518040 (CN)
(74) Representative: Isarpatent
(86) International application number: PCT/CN2023/114369
(87) International publication number: WO 2024/046179

(56) References cited:
- EP-A1- 4 016 272
- CN-A- 103 237 130
- CN-A- 104 423 826
- CN-A- 105 549 761
- CN-A- 106 484 087
- CN-A- 107 203 432
- CN-A- 113 655 940
- CN-A- 114 237 413
- US-A1- 2014 372 903

## Description

### TECHNICAL FIELD

This application relates to the field of electronic information technologies, and in particular, to an interactive event processing method, an electronic device, and a computer storage medium.

### BACKGROUND

With development of science and technology, use of touchscreen electronic devices such as a mobile phone or a tablet computer is no longer limited to direct control of these electronic devices. There is also a case in which control is performed by using an external input device and a case in which these touchscreen electronic devices may be projected onto other electronic devices for control. For example, a keyboard and a mouse may be externally connected to a touchscreen electronic device such as a mobile phone, so that the mobile phone may be used as an office computer, and the keyboard and the mouse may be used to control the touchscreen electronic device. Alternatively, the mobile phone is projected onto a notebook computer or a computer for co-working, and then a built-in keyboard of the notebook computer is used to control the touchscreen electronic device, or an external keyboard and an external mouse of the notebook computer or the computer are used to control the touchscreen electronic device.

In the foregoing scenario, the mobile phone is used as an example. Because the keyboard and the mouse are essentially designed for the computer, control performed by using the keyboard and the mouse cannot exactly match the mobile phone. That is, although the keyboard and the mouse can implement control of the computer, when a controlled object becomes the mobile phone, some original control functions on the mobile phone cannot be implemented. For example, when the keyboard and the mouse are used to control the mobile phone, currently, a zoom function on the mobile phone cannot be implemented.

Therefore, how to implement zooming on a touchscreen electronic device by operating a keyboard and a mouse is an urgent technical problem to be resolved.

EP 4 016 272 A1 discloses a screen projection scenario and method, wherein the method comprises the steps of receiving, by a display device, a keyboard and mouse operation acting on virtual navigation keys, generating, by the display device, a key instruction according to the keyboard and mouse operation, sending, by the display device, the key instruction to a mobile phone, executing, by the mobile phone, a navigation function corresponding to the key instruction according to a preset correspondence, to adjust the first screen content to second screen content, receiving, by the display device, the second screen content sent by the mobile phone, and displaying, by the display device, the second screen content in the screen projection area.
CN 114 237 413 A refers to a method and apparatus for processing interactive events. The interaction events may be generated by different interaction devices. For example, when the user realizes image enlargement through the Ctrl key and the mouse wheel, at least one interaction event obtained by the unified interaction framework is the Ctrl event and the mouse wheel event. A unified interaction framework can control an ImageView control to enlarge the image through the combination of the Ctrl event and the mouse wheel event.
CN 113 655 940 A discloses a Linux-compatible Android-compatible two-finger zooming method, wherein the method comprises performing an action that simulates two-finger zooming in the Android application window, and the Android application window detects and analyzes messages that simulate the action of two-finger zooming; the actions include: pressing or releasing the keyboard button, pressing the left and right mouse buttons, Release and mouse movement, and scrolling of the mouse wheel. The simulated two-finger event includes: when any key on the keyboard is pressed and the mouse wheel is scrolled, the mouse wheel scrolls upward to simulate a two-finger zoom-in operation, and the mouse wheel scrolls down to simulate a two-finger zoom-out operation.

### SUMMARY

This application provides, as defined in the appended claims, an interactive event processing method, an electronic device, and a computer storage medium, to implement zooming on a touchscreen electronic device by operating a keyboard and a mouse.

According to a first aspect, an interactive event processing method as defined in the appended independent claim 1 is provided. The method includes: obtaining a combination key event, where the combination key event is an interactive event used to trigger a zoom function; converting the combination key event into a zoom touch event; and zooming an interface in response to the zoom touch event.

In a technical solution of this application, mainly a combination key event that cannot be responded to is converted into a zoom touch event that can be responded to, and then a response is made, so that an effect of controlling a zoom function of a touchscreen electronic device by using a keyboard and a mouse is achieved. In addition, this solution is easy to implement without a need for excessive modifications.

With reference to the first aspect, the converting the combination key event into a zoom touch event includes: converting parameters of the combination key event into corresponding parameters in the zoom touch event.

With reference to the first aspect, the combination key event is a combination event of a control key event and a mouse scroll event; the parameters of the combination key event include a scrolling direction and a scrolling amount of a wheel; and the parameters of the zoom touch event include a pinching direction and a pinching distance. The converting parameters of the combination key event into corresponding parameters in the zoom touch event includes: converting the scrolling amount into the pinching distance, and converting the scrolling direction into the pinching direction.

With reference to the first aspect, in some implementations of the first aspect, the method further includes:
determining whether the combination key event is a zoom combination key event; and
when the combination key event is the zoom combination key event, performing the step of converting the combination key event into the zoom touch event; or
when the combination key event is not the zoom combination key event, terminating a processing procedure of the interactive event.

In this implementation, an input of a pure control key event can be shielded, or a pure scroll event is prevented from being mistakenly used as a zoom combination key for making a response.

With reference to the first aspect, in some implementations of the first aspect, when the converting the combination key event into a zoom touch event may further include:
determining whether a previous round of conversion of the combination key event is still being performed; and
discarding the combination key event when the previous round of conversion of the combination key event is still being performed; or
converting the combination key event into the zoom touch event when the previous round of conversion of the combination key event is not being performed.

In this implementation, accuracy of processing continuously triggered combination key events can be improved.

With reference to the first aspect, in some implementations of the first aspect, the obtaining a combination key event may include:
obtaining the combination key event by using a hardware driver or collaborative office software.

With reference to the first aspect, in some implementations of the first aspect, the method further includes:
determining whether a foreground application supports zooming; and
when the foreground application supports zooming, the zooming an interface in response to the zoom touch event includes: zooming a running interface of the foreground application in response to the zoom touch event; or
when the foreground application does not support zooming, terminating the processing procedure of the interactive event.

With reference to the first aspect, in some implementations of the first aspect, the determining whether a foreground application supports zooming may include:
comparing information about the foreground application with preconfiguration information of a whitelist application, to determine whether the foreground application is an application in the whitelist application, where the whitelist application includes at least one application that supports the zoom function; and
when the foreground application is an application in the whitelist application, determining that the foreground application supports zooming; or
when the foreground application is not an application in the whitelist application, determining that the foreground application does not support zooming.

With reference to the first aspect, in some implementations of the first aspect, the method further includes:
discarding the combination key event after the zoom touch event is generated.

According to a second aspect, described but not claimed, an interactive event processing apparatus is provided. The apparatus includes a unit that includes software and/or hardware and is configured to perform any one of the methods in the first aspect.

In an embodiment, the apparatus includes:
an obtaining unit, configured to obtain a combination key event, where the combination key event is an interactive event used to trigger a zoom function; and
a processing unit, configured to:
   convert the combination key event into a zoom touch event; and
   zoom an interface in response to the zoom touch event.

With reference to the second aspect, in some implementations of the second aspect, the processing unit is specifically configured to convert parameters of the combination key event into corresponding parameters in the zoom touch event.

With reference to the second aspect, in some implementations of the second aspect, the combination key event is a combination event of a control key event and a mouse scroll event; the parameters of the combination key event include a scrolling direction and a scrolling amount of a wheel; and the parameters of the zoom touch event include a pinching direction and a pinching distance. The processing unit is specifically configured to:
convert the scrolling amount into the pinching distance, and convert the scrolling direction into the pinching direction.

With reference to the second aspect, in some implementations of the second aspect, the processing unit is further configured to:
determine whether the combination key event is a zoom combination key event; and
when the combination key event is the zoom combination key event, perform a step of converting the combination key event into the zoom touch event; or
when the combination key event is not the zoom combination key event, terminate a processing procedure of the interactive event.

With reference to the second aspect, in some implementations of the second aspect, the processing unit is further configured to:
determine whether a previous round of conversion of the combination key event is still being performed; and
discard the combination key event when the previous round of conversion of the combination key event is still being performed; or
convert the combination key event into the zoom touch event when the previous round of conversion of the combination key event is not being performed.

With reference to the second aspect, in some implementations of the second aspect, the obtaining unit is specifically configured to:
obtain the combination key event by using a hardware driver or collaborative office software.

With reference to the second aspect, in some implementations of the second aspect, the processing unit is further configured to:
determine whether a foreground application supports zooming; and
when the foreground application supports zooming, the zooming an interface in response to the zoom touch event includes: zooming a running interface of the foreground application in response to the zoom touch event; or
when the foreground application does not support zooming, terminating the processing procedure of the interactive event.

With reference to the second aspect, in some implementations of the second aspect, the processing unit is specifically configured to:
compare information about the foreground application with preconfiguration information of a whitelist application, to determine whether the foreground application is an application in the whitelist application, where the whitelist application includes at least one application that supports the zoom function; and
when the foreground application is an application in the whitelist application, determine that the foreground application supports zooming; or
when the foreground application is not an application in the whitelist application, determine that the foreground application does not support zooming.

With reference to the second aspect, in some implementations of the second aspect, the processing unit is further configured to:
discard the combination key event after the zoom touch event is generated.

According to a third aspect, an electronic device as defined by the appended independent claim 8 is provided, including a memory, a processor, and a computer program that is stored in the memory and that is capable of running on the processor. When the processor executes the computer program, any one of the methods in the first aspect can be implemented.

According to a fourth aspect, described but not claimed, a chip is provided, including a processor, where the processor is configured to read and execute a computer program stored in a memory, and when the computer program is executed by the processor, any one of the methods in the first aspect can be implemented.

Optionally, the chip further includes a memory, and the memory is electrically connected to the processor.

Optionally, the chip may further include a communication interface.

According to a fifth aspect, a computer-readable storage medium as defined by the appended independent claim 9 is provided. The computer-readable storage medium stores a computer program. When the computer program is executed by a processor, any one of the methods in the first aspect can be implemented.

According to a sixth aspect, described but not claimed, a computer program product is provided. The computer program product includes a computer program, and when the computer program is executed by a processor, any one of the methods in the first aspect can be implemented.

### BRIEF DESCRIPTION OF THE DRAWINGS

FIG. 1 is a schematic diagram of an interactive scenario according to an embodiment of this application;
FIG. 2 is a schematic diagram of another interactive scenario according to an embodiment of this application;
FIG. 3 is a schematic diagram of a response process of a zoom function;
FIG. 4 is a schematic diagram of a structure of an electronic device according to an embodiment of this application;
FIG. 5 is a block diagram of a software structure of an electronic device according to an embodiment of this application;
FIG. 6 is a schematic diagram of an interactive event processing process in a first-type interactive scenario according to an embodiment of this application;
FIG. 7 is a schematic diagram of an interactive event processing process in a second-type interactive scenario according to an embodiment of this application;
FIG. 8 is a schematic flowchart of an interactive event processing method according to an embodiment of this application;
FIG. 9 is a schematic flowchart of another interactive event processing method according to an embodiment of this application;
FIG. 10 is a schematic flowchart of still another interactive event processing method according to an embodiment of this application; and
FIG. 11 is a schematic diagram of an interactive event processing apparatus according to an embodiment of this application.

### DESCRIPTION OF EMBODIMENTS

The following describes solutions of the embodiments of this application with reference to the accompanying drawings. An interactive event processing method provided in this application can be applied to a keyboard and mouse control scenario of various touchscreen electronic devices. The interactive event processing method provided in this application can be used in a touchscreen electronic device that can support control with external keyboard and mouse apparatuses.

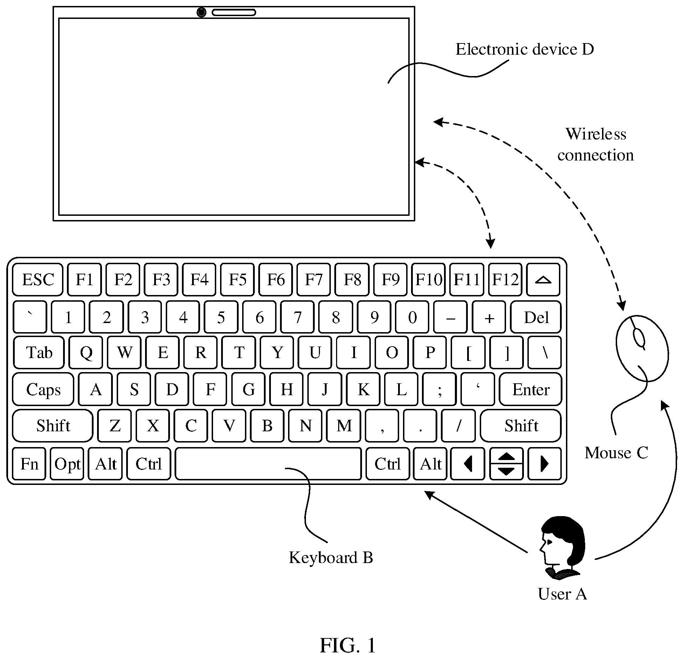

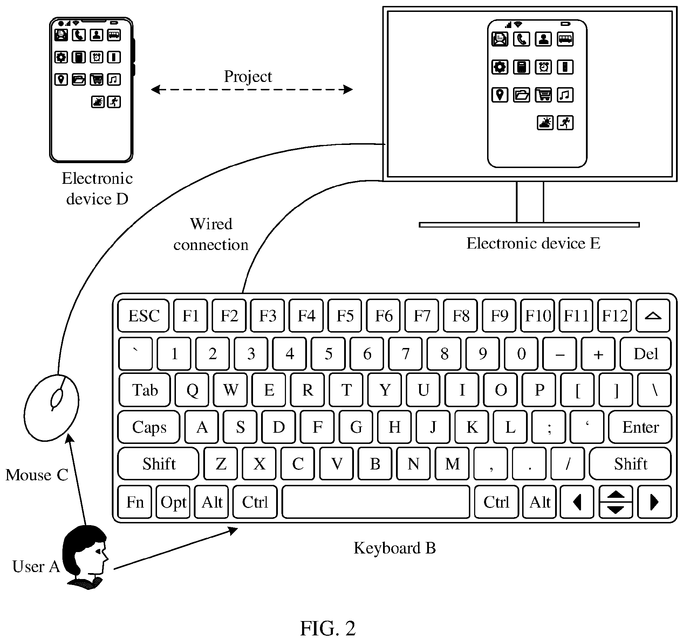

FIG. 1 is a schematic diagram of an interactive scenario according to an embodiment of this application. It should be understood that this embodiment of this application mainly includes two types of interactive scenarios. In a first-type interactive scenario, a touchscreen electronic device is directly externally connected to a keyboard and a mouse, and the external keyboard and the external mouse are used to control the touchscreen electronic device. In a second-type interactive scenario, a touchscreen electronic device is projected onto a projection device, and the touchscreen electronic device is controlled by using an external keyboard and an external mouse of the projection device. FIG. 1 is an example of the first-type interactive scenario, and FIG. 2 is an example of the second-type interactive scenario.

As shown in FIG. 1, in this scenario, an electronic device D is a touchscreen electronic device, that is, an electronic device that can be controlled by performing a touch operation such as tapping, double-tapping, or sliding on a screen. The touchscreen electronic device may also be referred to as a touchscreen device or a touchscreen terminal. The electronic device D may be, for example, a mobile phone or a tablet computer, or another electronic device that can perform touch control. In FIG. 1, that the electronic device D is a tablet computer is mainly used as an example. It should be understood that a main input manner of the electronic device D is a touch operation, but an input manner in which a mechanical key such as a power key or a volume key performs a key operation may also exist.

That is, the touchscreen electronic device in this embodiment of this application mainly refers to that an original main input manner is the touch operation and the key operation is not the original main input manner of the touchscreen electronic device. That is, a keyboard and a mouse are not original input apparatuses of the touchscreen electronic device, but are merely expanded input apparatuses of the touchscreen electronic device. For example, for a mobile phone, a touch operation on a screen is a main input manner of the mobile phone, and a use scenario in which a keyboard and a mouse can be externally connected to control the mobile phone is derived only with development of science and technology. However, because the keyboard and the mouse are essentially designed for a computer, control performed by using the keyboard and the mouse cannot exactly match the mobile phone. That is, although the keyboard and the mouse can implement control of the computer, when a controlled object becomes the mobile phone, some original control functions on the mobile phone cannot be implemented.

In the scenario shown in FIG. 1, the electronic device D is externally connected to a keyboard B and a mouse C in a wireless connection manner. The wireless connection manner may be, for example, a Bluetooth connection, but it should be understood that the wireless connection manner may alternatively be another wireless connection manner. In addition, the wireless connection manner may be replaced with a wired connection manner, which is not limited. Shapes and models of the keyboard B and the mouse C and a key layout on the keyboard B are also not limited. For example, an Fn key in the keyboard B shown in FIG. 1 may not exist, or an actual position is different from a position shown in the figure. For another example, an icon of a direction key may be in another representation form. For another example, there may be a numeric keyboard area, that is, a small keyboard area. For another example, there may be a volume key and the like. Other possible cases are not described one by one.

In the scenario shown in FIG. 1, a user A may control the electronic device D by operating the keyboard B and the mouse C.

It should be noted that an interactive event in this embodiment of this application includes two types: a key event and a touch event. The key event is used to indicate an interactive event generated by operating a key or a button on the keyboard and/or the mouse. The touch event is used to indicate an interactive event generated by touching the screen. It should be understood that the touch event herein is an interactive event generated by a touch operation on the screen of the touchscreen electronic device, and is different from that on a touchpad (touch panel) on a notebook computer.

If the user A pushes a wheel (scroll lock) of the mouse C while pressing a ctrl key of the keyboard B, a combination key event of ctrl+scroll is formed. It should be understood that pushing the wheel includes scrolling up and scrolling down, that is, the wheel may have two scrolling directions, and the two scrolling directions are respectively described as up and down. In operations of an external keyboard and an external mouse of a conventional computer, ctrl+scroll can implement a zoom function, where ctrl+scroll up can implement a zoom in function, and ctrl+scroll down can implement a zoom out function. If only the wheel is operated, a page-turning function is implemented. Scrolling up corresponds to turning a page upward, and scrolling down corresponds to turning a page downward. It should be understood that because the ctrl key is a control key, a controlled device does not generate a corresponding operation after only the ctrl key is pressed. Therefore, ctrl in the combination key event of ctrl+scroll may be considered as a state value of a scroll event, that is, the combination key event of ctrl+scroll may be considered as a scroll event that carries a ctrl state value.

For a current touchscreen electronic device, if a keyboard and a mouse are connected for control, even if a combination key event of ctrl+scroll is generated by operating the keyboard and the mouse, the touchscreen electronic device cannot respond to the combination key event, that is, zooming cannot be implemented.

To resolve the foregoing problem, in a solution in this embodiment of this application, additional processing is mainly performed on the combination key event, to control zooming on the touchscreen electronic device through the combination key event. In the scenario shown in FIG. 1, if the user A scrolls the wheel of the mouse C while pressing the ctrl key of the keyboard B, the electronic device D processes the combination key event of ctrl+scroll according to the solution in this embodiment of this application, to implement interface zooming on the electronic device D. A specific process is described below, and is not elaborated herein.

FIG. 2 is a schematic diagram of another interactive scenario according to an embodiment of this application. As described above, FIG. 2 is an example of the second-type interactive scenario. As shown in FIG. 2, in this scenario, an electronic device D is a touchscreen electronic device, and references may be made to related descriptions of the electronic device D in FIG. 1.

In the scenario shown in FIG. 2, the electronic device D is projected onto an electronic device E through near field communication, that is, a short-range wireless communication technology. However, it should be understood that a communication manner between the electronic device D and the electronic device E is not limited in this embodiment of this application. The electronic device E may be referred to as a projection device. The electronic device E may be an electronic device that can be controlled by using a keyboard and a mouse, such as a notebook computer or a computer. The notebook computer usually has a built-in keyboard, so that the built-in keyboard of the notebook computer and an external mouse may be used for control. The computer usually needs an external keyboard and an external mouse for control.

It should be understood that the electronic device E and the electronic device D are electronic devices that have different control manners. The electronic device D is a touchscreen electronic device, that is, an electronic device that can be controlled by performing a touch operation such as tapping, double-tapping, or sliding on a screen. A main input manner of the electronic device D is a touch operation. The electronic device E is an auxiliary device of the electronic device D in a co-working use scenario that is alternatively referred to as a collaborative working use scenario. A main function of the electronic device E is to provide a screen for the electronic device D, to synchronously display a screen picture of the electronic device D, and an interface and an input/output apparatus of the electronic device E can be invoked by the electronic device D. However, it should be understood that, in the collaborative working use scenario, processing of data, for example, processing of an input interactive event, is still performed by the electronic device D.

As described above, the touchscreen electronic device in this embodiment of this application mainly refers to that an original main input manner is the touch operation and the key operation is not the original main input manner of the touchscreen electronic device. That is, a keyboard and a mouse are not original input apparatuses of the touchscreen electronic device, but are merely expanded input apparatuses of the touchscreen electronic device. For the projection device, an original main input manner is a key operation, that is, a keyboard and a mouse are original input apparatuses of the projection device, and are not expanded input apparatuses of the projection device.

In the scenario shown in FIG. 2, a keyboard B and a mouse C are externally connected to the electronic device E in a wired connection manner. However, it should be understood that the keyboard B and the mouse C may alternatively be externally connected to the electronic device E in a wireless connection manner, which is not limited. For descriptions of the keyboard B and the mouse C, references may also be made to related content in FIG. 1.

In the scenario shown in FIG. 2, a user A may control the electronic device D by operating the keyboard B and the mouse C.

If the user A pushes the wheel of mouse C while pressing the ctrl key of the keyboard B, a combination key event of ctrl+scroll is generated. The combination key event is reported to the electronic device E, and then is transmitted to the electronic device D through a communication channel between the electronic device D and the electronic device E. However, because the electronic device D cannot respond to the combination key event, the electronic device D cannot implement zooming.

To resolve this problem, in a solution in this embodiment of this application, additional processing is performed by the electronic device D on the combination key event, to control a zoom function of the touchscreen electronic device through the combination key event. In the scenario shown in FIG. 2, if the user A scrolls the wheel of the mouse C while pressing the ctrl key of the keyboard B, the electronic device D performs some processing on the combination key event of ctrl+scroll according to the solution in this embodiment of this application, to implement interface zooming on the electronic device D. It should be understood that, because the electronic device E herein is a projection device of the electronic device D, an interface of the electronic device D is synchronized with a projected interface of the electronic device D in a screen of the electronic device E. Therefore, the interface of the electronic device D and the projected interface of the electronic device D on the electronic device E are zoomed synchronously.

In an example, the electronic device D uses an Android operating system, and the electronic device E uses a windows operating system.

It can be learned from FIG. 1 and FIG. 2 that in this embodiment of this application, implementing zooming on a touchscreen electronic device by operating a keyboard and a mouse includes: implementing zooming of an interface of the touchscreen electronic device by using an external keyboard and an external mouse of the touchscreen electronic device; or implementing zooming of an interface of the touchscreen electronic device and zooming of a projected interface of the touchscreen electronic device on a projection device of the touchscreen electronic device by using a keyboard and a mouse of the projection device.

It should be noted that, a type of notebook computer appears currently, and the notebook computer may have functions of both a common notebook computer and a tablet computer, that is, have a capability of processing both a touchscreen interactive event and a keyboard-mouse interactive event, and may be referred to as a touchscreen notebook computer. However, notebook computers of this type all use a windows operating system, and the two types of interactive events correspond to two independent processing procedures. If this type of touchscreen notebook computer is directly operated, a zoom function of the touchscreen notebook computer is implemented by directly responding to a touch operation of a user or directly responding to operations performed by a user on a keyboard and a mouse, that is, the user may perform zooming by performing a touch operation on a screen, or perform zooming by operating the keyboard and the mouse. This manner using the two processing procedures cannot be applied to a device such as the electronic device D. The reason is that if the two processing procedures are forcibly applied to the electronic device D, the electronic device D needs to use a windows system, and a software architecture and a matching hardware architecture of the entire electronic device need to be changed and redesigned. However, this change is equivalent to completely transforming the mobile phone into a notebook computer, which is costly, complex, and unnecessary. It is not necessary to forcibly transform an existing product category into another existing product category. In short, the above touchscreen notebook computer itself originally has input apparatuses of a touch operation input manner and a key operation input manner, and processing apparatuses and processing procedures have been matched and designed for the two types of interactive events. Therefore, this type of touchscreen notebook computer is not the touchscreen electronic device described in this embodiment of this application, that is, the electronic device D is not this type of touchscreen notebook computer.

However, a touchscreen notebook computer may be used as the projection device in this embodiment of this application, that is, the electronic device E may be a touchscreen notebook computer. If a touchscreen electronic device such as a mobile phone or a tablet computer is projected onto a touchscreen notebook computer, using a mobile phone as an example, even if a keyboard and an external mouse of the touchscreen notebook computer are used to performing zooming, because the touchscreen notebook computer serves only as a data carrier, it is still the mobile phone that really performs an operational operation. Therefore, in this case, even if the keyboard and the mouse connected to the touchscreen notebook computer are operated, zooming cannot be performed, and the solution in this embodiment of this application still needs to be used to first convert a key event of the keyboard and the mouse into a touch event and then make a response, thereby implementing zooming of an interface of the mobile phone and a projected interface of the mobile phone on the touchscreen notebook computer.

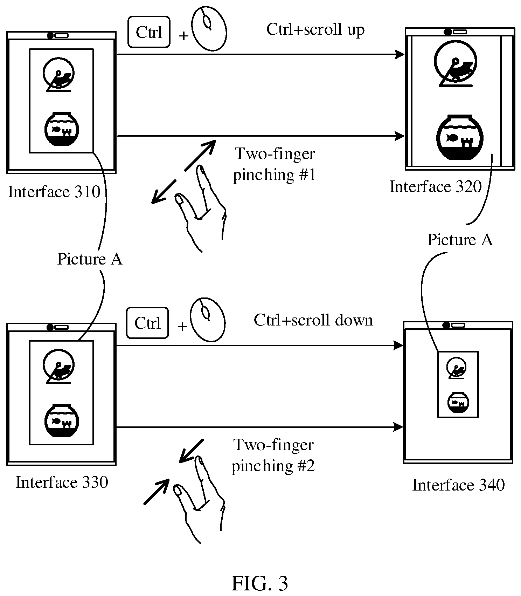

FIG. 3 is a schematic diagram of a response process of a zoom function. As shown in FIG. 3, if a zooming-in touch operation is performed on an interface 310, that is, two fingers slide in a direction in which a distance between the two fingers increases, a zooming-in touch event may be generated. In FIG. 3, the zooming-in touch event is represented by two-finger pinching #1, and an electronic device processes the touch event represented by the two-finger pinching #1, to obtain an interface 320. It can be learned that a picture A in the interface 320 is larger than the picture A in the interface 310, that is, a proportion of the picture A on a screen of the electronic device increases.

If a zooming-in key operation is performed on the interface 310, that is, a wheel is pushed up while a ctrl key is pressed, a combination key event of ctrl+scroll up may be generated. In FIG. 3, a zooming-in combination key event is represented by ctrl+scroll up. The interface 320 can also be obtained if the electronic device processes the key event, that is, the combination key event of ctrl+scroll up. That is, both the zooming-in combination key event and the zooming-in touch event can zoom in an interface of the electronic device.

If a zooming-out touch operation is performed on an interface 330, that is, two fingers slide in a direction in which a distance between the two fingers decreases, a zooming-out touch event may be generated. In FIG. 3, the zooming-out touch event is represented by two-finger pinching #2, and the electronic device processes the touch event represented by the two-finger pinching #2, to obtain an interface 340. It can be learned that the picture A in the interface 340 is smaller than the picture A in the interface 330, that is, the proportion of the picture A on the screen of the electronic device decreases.

If a zooming-out key operation is performed on the interface 330, that is, the wheel is pushed down while the ctrl key is pressed, a combination key event of ctrl+scroll down may be generated. In FIG. 3, a zooming-out combination key event is represented by ctrl+scroll down. The interface 340 can also be obtained if the electronic device processes the key event, that is, the combination key event of ctrl+scroll down. That is, both the zooming-out combination key event and the zooming-out touch event can zoom out an interface of the electronic device.

FIG. 3 may be considered as an example in which a foreground application of the electronic device is a picture viewing application. It is an inherent function of the electronic device to implement a zoom function through a two-finger pinching touch event. In the solution of this embodiment of this application, the zoom function can be implemented through a key operation of ctrl+scroll. In this embodiment of this application, that a touchscreen electronic device already has a touch operation corresponding to the zoom function is mainly considered. Therefore, the electronic device may respond to a zoom touch event as long as a zoom combination key event is converted into the zoom touch event. Alternatively, it is understood that a mapping relationship between a key event and a touch event that are of the zoom function is established. Therefore, when a zoom combination key event is input to the electronic device, the electronic device only needs to add a conversion step. First, the zoom combination key event is converted into a zoom touch event, so that processing can be continued according to an original processing procedure of the touch event. Therefore, control of the zoom function of the electronic device is implemented by using a keyboard and a mouse from a user perspective. In this solution, an additional conversion step is added to an existing touch event processing procedure. Therefore, transformation is relatively less difficult and is easy to implement. A hardware structure does not need to be changed, nor does a complex processing procedure need to be redesigned.

ctrl+scroll is the most commonly used key operation of the zoom function. Therefore, this combination key event is used to trigger the zoom function, which is more in line with a user's usage habit. However, it should be understood that another key event may be designed to replace this combination key event, only some adaptive changes need to be added, and it is necessary to explain to the user that a corresponding function of the another key event is zooming. For example, a combination key event that is not currently occupied may be set to a combination key operation of the zoom function.

It can be learned that FIG. 3 mainly shows that zooming can be implemented through a touch operation or a combination key operation, that is, a zoom touch event and a zoom combination key event are compared to show that the two events can achieve a same effect. FIG. 3 is mainly to describe that the solution in this embodiment of this application can enable the zoom combination key event to achieve a same zooming effect as the two-finger pinching touch event.

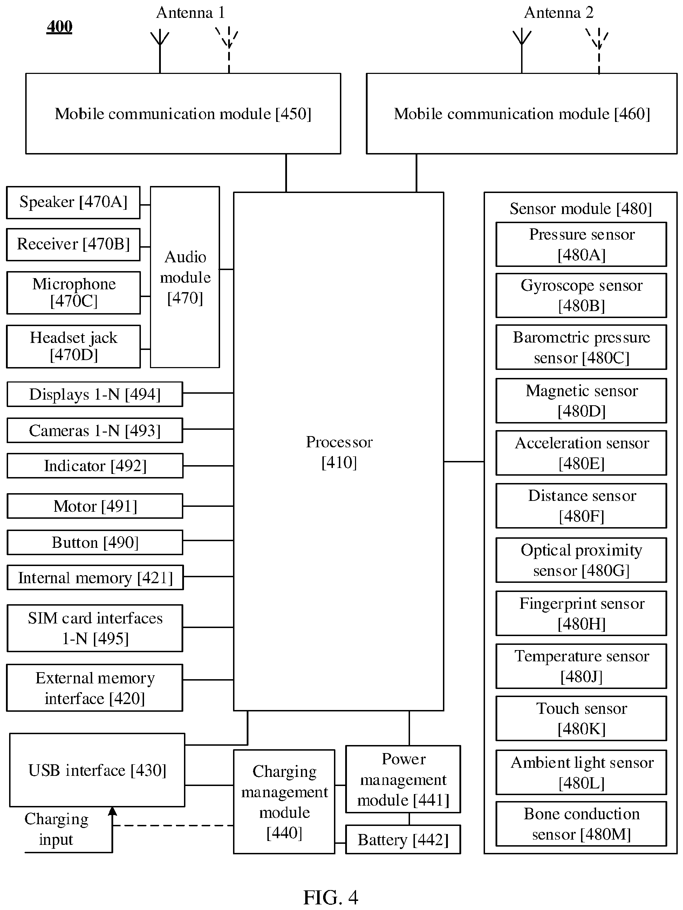

FIG. 4 is a schematic diagram of a structure of an electronic device according to an embodiment of this application. As shown in FIG. 4, an electronic device 400 may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identity module (subscriber identification module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It may be understood that the structure illustrated in this embodiment of this application constitutes no specific limitation on the electronic device 400. In some other embodiments of this application, the electronic device 400 may include more or fewer components than those shown in the figure, some components may be combined, some components may be split, or components may be arranged in different manners. The components shown in the figure may be implemented by hardware, software, or a combination of software and hardware.

For example, the processor 410 shown in FIG. 4 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 400. The controller may generate an operation control signal based on an instruction operation code and a time sequence signal, to complete control of instruction fetching and instruction execution.

The memory may be further disposed in the processor 410, and is configured to store instructions and data. In some embodiments, the memory in the processor 410 is a cache memory. The memory may store instructions or data just used or cyclically used by the processor 410. If the processor 410 needs to use the instructions or the data again, the processor 410 may directly invoke the instructions or the data from the memory. This avoids repeated access and reduces a wait time of the processor 410, thereby improving efficiency of a system.

In some embodiments, the processor 410 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

In some embodiments, the I2C interface is a bidirectional synchronous serial bus, and includes one serial data line (serial data line, SDA) and one serial clock line (derail clock line, SCL). The processor 410 may include a plurality of groups of I2C buses. The processor 410 may be separately coupled to the touch sensor 480K, a charger, a flashlight, the camera 493, and the like through different I2C bus interfaces. For example, the processor 410 may be coupled to the touch sensor 480K through the I2C interface, so that the processor 410 communicates with the touch sensor 480K through the I2C bus interface, thereby implementing a touch function of the electronic device 400.

In some embodiments, the I2S interface may be used for audio communication. The processor 410 may include a plurality of groups of I2S buses. The processor 410 may be coupled to the audio module 470 through the I2S bus, to implement communication between the processor 410 and the audio module 470.

In some embodiments, the audio module 470 may transfer an audio signal to the wireless communication module 460 through the I2S interface, to implement a function of answering a call by using a Bluetooth headset.

In some embodiments, the PCM interface may also be used for audio communication to sample, quantize, and code an analog signal. The audio module 470 may be coupled to the wireless communication module 460 through the PCM bus interface.

In some embodiments, the audio module 470 may also transfer an audio signal to the wireless communication module 460 through the PCM interface, to implement the function of answering a call by using the Bluetooth headset. It should be understood that both the I2S interface and the PCM interface can be used for audio communication.

In some embodiments, the UART interface is a type of universal serial data bus used for asynchronous communication. The bus may be a bidirectional communication bus. The bus converts to-be-transmitted data between serial communication and parallel communication. The UART interface is usually configured to connect the processor 410 to the wireless communication module 460. For example, the processor 410 communicates with a Bluetooth module in the wireless communication module 460 through the UART interface, to implement a Bluetooth function. In some embodiments, the audio module 470 may transfer an audio signal to the wireless communication module 460 through the UART interface, to implement a function of playing music by using a Bluetooth headset.

In some embodiments, the MIPI may be configured to connect the processor 410 to peripheral components such as the display 494 and the camera 493. The MIPI includes a camera serial interface (camera serial interface, CSI), a display serial interface (display serial interface, DSI), and the like. The processor 410 communicates with the camera 493 through the CSI, to implement a photographing function of the electronic device 400. The processor 410 communicates with the display 494 through the DSI, to implement a display function of the electronic device 400.

In some embodiments, the GPIO interface may be configured by using software. The GPIO interface may be configured as a control signal or may be configured as a data signal. The GPIO interface may be configured to connect the processor 410 to the camera 493, the display 494, the wireless communication module 460, the audio module 470, the sensor module 480, and the like. The GPIO interface may alternatively be configured as an I2C interface, an I2S interface, a UART interface, an MIPI, or the like.

For example, the USB interface 430 is an interface that complies with USB standard specifications, and may be specifically a Mini USB interface, a Micro USB interface, a USB Type C interface, or the like. The USB interface 430 may be configured to connect to a charger to charge the electronic device 400, or may be configured to transmit data between the electronic device 400 and a peripheral device, or may be configured to connect to a headset to play audio by using the headset. The interface may alternatively be configured to connect to another electronic device, for example, an AR device.

It may be understood that an interface connection relationship between the modules that is shown in this embodiment of this application is merely an example for description, and constitutes no limitation on the structure of the electronic device 400. In some other embodiments of this application, the electronic device 400 may alternatively use an interface connection manner different from that in the foregoing embodiment, or use a combination of a plurality of interface connection manners.

The charging management module 440 is configured to receive a charging input from the charger. The charger may be a wireless charger or a wired charger. In some wired charging embodiments, the charging management module 440 may receive a charging input of a wired charger through the USB interface 430. In some wireless charging embodiments, the charging management module 440 may receive a wireless charging input by using a wireless charging coil of the electronic device 400. The charging management module 440 may further supply power to the electronic device by using the power management module 441 while charging the battery 442.

The power management module 441 is configured to connect to the battery 442, the charging management module 440, and the processor 410. The power management module 441 receives an input from the battery 442 and/or the charging management module 440, to supply power to the processor 410, the internal memory 421, the external memory, the display 494, the camera 493, the wireless communication module 460, and the like. The power management module 441 may be further configured to monitor parameters such as a battery capacity, a quantity of battery cycles, and a battery health status (leakage or impedance). In some other embodiments, the power management module 441 may alternatively be disposed in the processor 410. In some other embodiments, the power management unit 441 and the charging management module 440 may alternatively be disposed in a same device.

A wireless communication function of the electronic device 400 may be implemented by using the antenna 1, the antenna 2, the mobile communication module 450, the wireless communication module 460, the modem processor, the baseband processor, and the like.

The antenna 1 and the antenna 2 are configured to transmit and receive electromagnetic wave signals. Each antenna in the electronic device 400 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 450 may provide a wireless communication solution applied to the electronic device 400, for example, at least one of the following solutions: a 2nd generation (2nd generation, 2G) mobile communication solution, a 3rd generation (3rd generation, 3G) mobile communication solution, a 4th generation (4th generation, 4G) mobile communication solution, and a 5th generation (5th generation, 5G) mobile communication solution. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering and amplification on the received electromagnetic wave, and then transmit the electromagnetic wave to the modem processor for demodulation. The mobile communication module 450 may further amplify a signal that is modulated by the modem processor, and convert the amplified signal into an electromagnetic wave for radiation through the antenna 1. In some embodiments, at least some functional modules of the mobile communication module 450 may be disposed in the processor 410. In some embodiments, at least some functional modules of the mobile communication module 450 may be disposed in a same device as at least some modules of the processor 410.

The modem processor may include a modulator and a demodulator. The modulator is configured to modulate a to-be-sent low-frequency baseband signal into an intermediate-frequency signal or a high-frequency signal. The demodulator is configured to demodulate the received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal by using an audio device (not limited to the speaker 470A or the receiver 470B), or displays an image or a video by using the display 494. In some embodiments, the modem processor may be an independent device. In other embodiments, the modem processor may be independent of the processor 410 and disposed in a same device as the mobile communication module 450 or another functional module.

The wireless communication module 460 may provide a wireless communication solution applied to the electronic device 400, including a wireless local area network (wireless local area networks, WLAN) (for example, a wireless fidelity (wireless fidelity, Wi-Fi) network), Bluetooth (blue tooth, BT), a global navigation satellite system (global navigation satellite system, GNSS), frequency modulation (frequency modulation, FM), near field communication (near field communication, NFC), an infrared (infrared, IR) technology, and the like. The wireless communication module 460 may be one or more devices integrating at least one communication processing module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the signal, and convert, through the antenna 2, the signal into an electromagnetic wave for radiation.

In some embodiments, the antenna 1 and the mobile communication module 450 in the electronic device 400 are coupled, and the antenna 2 and the wireless communication module 460 in the electronic device 400 are coupled, so that the electronic device 400 may communicate with a network and another electronic device by using a wireless communication technology. The wireless communication technology may include at least one of the following communication technologies: a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, and an IR technology. The GNSS may include at least one of the following positioning technologies: a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and a satellite based augmentation systems (satellite based augmentation systems, SBAS).

The electronic device 400 implements a display function by using the GPU, the display 494, the application processor, and the like. The GPU is a microprocessor for image processing, and is connected to the display 494 and the application processor. The GPU is configured to perform mathematical and geometrical calculation, and is configured to render graphics. The processor 410 may include one or more GPUs, and the GPU executes program instructions to generate or change displayed information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Mini-led, a Micro-Led, a Micro-oLed, a quantum dot light-emitting diode (quantum dot light-emitting diodes, QLED), or the like. In some embodiments, the electronic device 400 may include 1 or N displays 494, where N is a positive integer greater than 1.

The electronic device 400 may implement a photographing function by using the ISP, the camera 493, the video codec, the GPU, the display 494, the application processor, and the like.

The ISP is configured to process data fed back by the camera 493. For example, during photographing, a shutter is pressed, light is transferred to a photosensitive element of the camera through a lens, an optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 493.

The camera 493 is configured to capture a still image or a video. An optical image is generated for an object through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 400 may include 1 or N cameras 493, where N is a positive integer greater than 1.

The digital signal processor is configured to process a digital signal, and may process another digital signal in addition to processing a digital image signal. For example, when the electronic device 400 selects a frequency, the digital signal processor is configured to perform Fourier transform and the like on frequency energy.

The video codec is configured to compress or decompress a digital video. The electronic device 400 may support one or more video codecs. Therefore, the electronic device 400 may play or record videos in a plurality of encoding formats such as moving picture experts group (moving picture experts group, MPEG)1, MPEG2, MPEG3, and MPEG4.

The NPU is a neural-network (neural-network, NN) computing processor, quickly processes input information by referring to a biological neural network structure, for example, by referring to a transmission mode between human brain neurons, and may further perform self-learning continuously. Applications such as intelligent cognition of the electronic device 400, for example, image recognition, face recognition, speech recognition, and text understanding, may be implemented by using the NPU.

The external memory interface 420 may be configured to connect to an external storage card such as a secure digital (secure digital, SD) card, to implement extension of a storage capability of the electronic device 400. The external storage card communicates with the processor 410 through the external memory interface 420, to implement a data storage function, for example, to store files such as music and a video in the external memory card.

The internal memory 421 may be configured to store computer-executable program code, and the executable program code includes instructions. The processor 410 executes various function applications and data processing of the electronic device 400 by running the instructions stored in the internal memory 421. The internal memory 421 may include a program storage area and a data storage area. The program storage area may store an operating system, an application required by at least one function (for example, a sound playing function or an image playing function), and the like. The data storage area may store data (such as audio data and a phone book) and the like created in a use process of the electronic device 400. In addition, the internal memory 421 may include a high-speed random access memory, and may further include a nonvolatile memory, for example, at least one magnetic disk storage device, a flash memory device, or a universal flash storage (universal flash storage, UFS).

The electronic device 400 may implement audio functions by using the audio module 470, the speaker 470A, the receiver 470B, the microphone 470C, the headset jack 470D, the application processor, and the like, for example, implement music playing and audio recording.

The audio module 470 is configured to convert digital audio information into an analog audio signal for output, and is also configured to convert an analog audio input into a digital audio signal. The audio module 470 may be further configured to encode and decode an audio signal. In some embodiments, the audio module 470 may be disposed in the processor 410 or some functional modules of the audio module 470 may be disposed in the processor 410.

The speaker 470A, also referred to as a "loudspeaker", is configured to convert an audio electrical signal into a sound signal. The electronic device 400 may be used to listen to music or answer a hands-free call by using the speaker 470A.

The receiver 470B, also referred to as an "earpiece", is configured to convert an audio electrical signal into a sound signal. When the electronic device 400 answers a call or voice message, the receiver 470B may be placed near a human ear to listen to a voice.

The microphone 470C, also referred to as a "mic" or "mike", is configured to convert a sound signal into an electrical signal. When making a call or sending a voice message, the user may make a sound by approaching the mouth to the microphone 470C, to input a sound signal to the microphone 470C. At least one microphone 470C may be disposed in the electronic device 400. In some other embodiments, the electronic device 400 may be provided with two microphones 470C, and may further implement a noise reduction function in addition to collecting a sound signal. In some other embodiments, three, four, or more microphones 470C may alternatively be disposed in the electronic device 400, to collect a sound signal, reduce noise, further identify a sound source, implement a directional recording function, and the like.

The headset jack 470D is configured to connect to a wired headset. The headset jack 470D may be the USB interface 430, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 480A is configured to sense a pressure signal, and may convert the pressure signal into an electrical signal. In some embodiments, the pressure sensor 480A may be disposed in the display 494. There are many types of pressure sensors 480A, for example, a resistive pressure sensor, an inductive pressure sensor, and a capacitive pressure sensor. The capacitive pressure sensor may include at least two parallel plates made of conductive materials. When force is applied to the pressure sensor 480A, capacitance between electrodes changes. The electronic device 400 determines intensity of a pressure based on a change of the capacitance. When a touch operation is performed on the display 494, the electronic device 400 detects intensity of the touch operation by using the pressure sensor 480A. The electronic device 400 may also calculate a touch position based on a detected signal of the pressure sensor 480A. In some embodiments, touch operations performed at a same touch position but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 480B may be configured to determine a moving posture of the electronic device 400. In some embodiments, angular velocities of the electronic device 400 around three axes (namely, x, y, and z axes) may be determined by using the gyroscope sensor 480B. The gyroscope sensor 480B may be configured to implement image stabilization during photographing. For example, when a shutter is pressed, the gyroscope sensor 480B detects an angle at which the electronic device 400 jitters, and calculates, based on the angle, a distance for which a lens module needs to compensate, so that a lens offsets the jitter of the electronic device 400 through a reverse motion, thereby implementing image stabilization. The gyroscope sensor 480B may be further used in a navigation scenario and a motion sensing game scenario.

The barometric pressure sensor 480C is configured to measure barometric pressure. In some embodiments, the electronic device 400 calculates an altitude based on a barometric pressure value measured by the barometric pressure sensor 480C, to assist in positioning and navigation.

The magnetic sensor 480D includes a Hall sensor. The electronic device 400 may detect opening and closing of a flip leather case by using the magnetic sensor 480D. In some embodiments, when the electronic device 400 is a flip device, the electronic device 400 may detect opening and closing of a flip cover by using the magnetic sensor 480D. A feature such as automatic unlocking in a case of flipping open is set based on a detected open/closed state of the leather case or the flip cover.

The acceleration sensor 480E may detect magnitudes of acceleration in various directions (usually on three axes) of the electronic device 400, may detect a magnitude and a direction of gravity when the electronic device 400 is still, may be further configured to identify a posture of the electronic device, and is applied to applications such as switching between a landscape mode and a portrait mode and a pedometer.

The distance sensor 480F is configured to measure a distance. The electronic device 400 may measure a distance in an infrared or laser manner. In some embodiments, in a photographing scenario, the electronic device 400 may use the distance sensor 480F to measure a distance to implement fast focusing.

The optical proximity sensor 480G may include, for example, a light-emitting diode (light-emitting diode, LED) and an optical detector such as a photodiode. The light-emitting diode may be an infrared light-emitting diode. The electronic device 400 emits infrared light outward by using the light-emitting diode. The electronic device 400 detects infrared reflected light from a nearby object by using the photodiode. When sufficient reflected light is detected, it may be determined that there is an object near the electronic device 400. When insufficient reflected light is detected, the electronic device 400 may determine that there is no object near the electronic device 400. The electronic device 400 may detect, by using the optical proximity sensor 480G, that the user holds the electronic device 400 close to an ear for a call, to implement automatic screen-off to save power. The optical proximity sensor 480G may also be used in a leather case mode and a pocket mode to automatically unlock or lock a screen.

The ambient light sensor 480L is configured to sense ambient light brightness. The electronic device 400 may adaptively adjust brightness of the display 494 based on the sensed ambient light brightness. The ambient light sensor 480L may be further configured to automatically adjust white balance during photographing. The ambient light sensor 480L may further cooperate with the optical proximity sensor 480G, to detect whether the electronic device 400 is in a pocket to prevent an accidental touch.

The fingerprint sensor 480H is configured to collect a fingerprint. The electronic device 400 may implement fingerprint unlocking, application lock accessing, fingerprint-based photographing, fingerprint-based call answering, and the like by using a feature of the collected fingerprint.

The temperature sensor 480J is configured to detect a temperature. In some embodiments, the electronic device 400 performs a temperature processing policy by using the temperature detected by the temperature sensor 480J. For example, when the temperature reported by the temperature sensor 480J exceeds a threshold, the electronic device 400 degrades performance of a processor located near the temperature sensor 480J, to reduce power consumption and implement thermal protection. In other embodiments, when the temperature is lower than another threshold, the electronic device 400 heats the battery 442, to avoid abnormal power-off of the electronic device 400 caused by a low temperature. In some other embodiments, when the temperature is lower than still another threshold, the electronic device 400 boosts an output voltage of the battery 442, to avoid abnormal power-off caused by a low temperature.

The touch sensor 480K is also referred to as a "touch panel". The touch sensor 480K may be disposed on the display 494. The touch sensor 480K and the display 494 form a touchscreen, which is also referred to as a "touch control screen". The touch sensor 480K is configured to detect a touch operation performed on or near the touch sensor 480K. The touch sensor may transmit a detected touch operation to the application processor to determine a type of a touch event. A visual output related to the touch operation may be provided by using the display 494. In some other embodiments, the touch sensor 480K may alternatively be disposed on a surface of the electronic device 400, at a position different from that of the display 494.

The bone conduction sensor 480M may obtain a vibration signal. In some embodiments, the bone conduction sensor 480M may obtain a vibration signal of a vibration bone of a human vocal-cord part. The bone conduction sensor 480M may also contact a human pulse to receive a blood pressure beat signal. In some embodiments, the bone conduction sensor 480M may alternatively be disposed in a headset, to form a bone conduction headset in combination with the headset. The audio module 470 may parse out a voice signal based on the vibration signal that is of the vibration bone of the vocal-cord part and that is obtained by the bone conduction sensor 480M, to implement a voice function. The application processor may parse heart rate information based on the blood pressure beat signal obtained by the bone conduction sensor 480M, to implement a heart rate detection function.

The button 490 includes a power-on key, a volume key, or the like. The button 490 may be a mechanical button, or may be a touch button. The electronic device 400 may receive a button input and generate a button signal input related to user settings and function control of the electronic device 400.

The motor 491 may generate a vibration prompt. The motor 491 may be configured to provide a vibration prompt for an incoming call, and may be further configured to provide vibration feedback for a touch. For example, touch operations performed on different applications (for example, photographing and audio playing) may correspond to different vibration feedback effects. The motor 491 may also correspond to different vibration feedback effects for touch operations performed on different areas of the display 494. Different application scenarios (for example, a time reminder, information receiving, an alarm clock, and a game) may also correspond to different vibration feedback effects. A touch vibration feedback effect may be further customized.

The indicator 492 may be an indicator light, may be configured to indicate a charging status or a power change, and may be further configured to indicate a message, a missed incoming call, a notification, and the like.

The SIM card interface 495 is configured to connect a SIM card. The SIM card may be inserted into the SIM card interface 495 or removed from the SIM card interface 495 to implement contact with and separation from the electronic device 400. The electronic device 400 can support one or N SIM card interfaces, where N is a positive integer greater than 1. The SIM card interface 495 can support a Nano SIM card, a Micro SIM card, a SIM card, and the like. A plurality of cards may be simultaneously inserted into a same SIM card interface 495. The plurality of cards may be of a same type or may be of different types. The SIM card interface 495 may be compatible with different types of SIM cards. The SIM card interface 495 may be further compatible with an external memory card. The electronic device 400 interacts with a network through the SIM card, to implement functions such as conversation and data communication. In some embodiments, the electronic device 400 uses an eSIM, that is, an embedded SIM card. The eSIM card may be embedded in the electronic device 400 and cannot be separated from the electronic device 400.

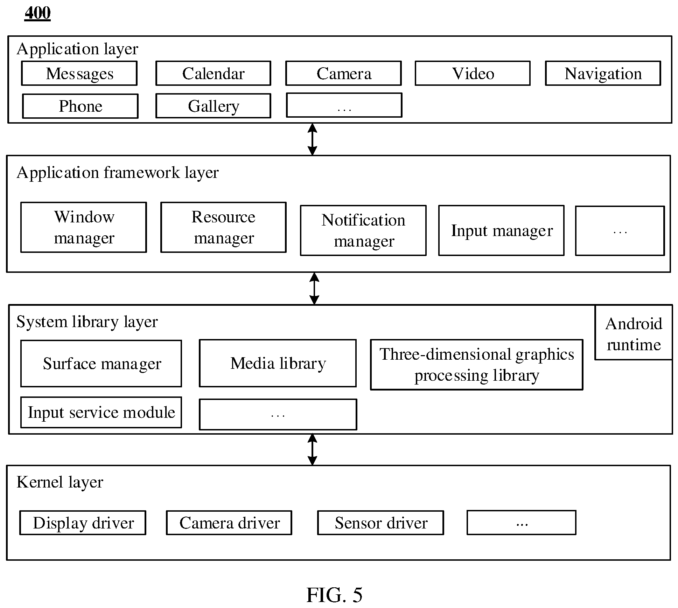

A software system of the electronic device 400 may use a layered architecture, an event-driven architecture, a microkernel architecture, a microservice architecture, or a cloud architecture. In embodiments of this application, an Android (Android) system with a layered architecture is used as an example to describe a software structure of the electronic device. With reference to FIG. 5, the following exemplarily describes the software structure of the electronic device by using an electronic device having an Android (Android) system with a layered architecture as an example.

FIG. 5 is a block diagram of a software structure of an electronic device according to an embodiment of this application. The electronic device in FIG. 5 may be the electronic device 400 shown in FIG. 4. As shown in FIG. 5, a layered architecture divides software into several layers, and each layer has a clear role and function. Layers communicate with each other through a software interface. In some embodiments, an Android system is divided into four layers: an application layer, an application framework layer, a system library layer, and a kernel layer from top to bottom. The application layer may include a series of application packages. However, it should be understood that FIG. 5 is only an example in which the Android system is layered, and another layering manner may exist in an actual scenario. In addition, there may be another naming manner for naming of modules in each layer. This is not limited. For example, the application framework layer may be referred to as a framework layer, or the system library layer may be combined into the application framework layer.

As shown in FIG. 5, the application packages may include applications (application, APP) such as Messages, Calendar, Camera, Video, Navigation, Phone, and Gallery. For convenience, an application program is briefly referred to as an application in the following. A running application program may also be referred to as a foreground application or a front-end application.

Because some applications support a zoom function, such as Messages, Gallery, or Navigation, and some applications do not support the zoom function, such as Settings and Remote Control, electronic devices of different manufacturers may be different. In short, applications may be classified into applications that support the zoom function and applications that do not support the zoom function. In this embodiment of this application, a combination key operation may be implemented for an application that supports the zoom function.

The application framework layer provides an application programming interface (application programming interface, API) and a programming framework for the applications at the application layer. The application framework layer includes some predefined functions.

As shown in FIG. 5, the application framework layer may include a window manager, a resource manager, a notification manager, an input manager, and the like.

The window manager is configured to manage a window program. The window manager may obtain a size of a display, determine whether a status bar exists, lock a screen, take a screenshot, and the like.

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to notify download completion, provide a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The input manager (InputManagerService) is mainly configured to manage an input part of the entire system, including a keyboard, a mouse, a touchscreen, or the like.

The system library layer may include Android runtime (Android runtime) and a system library, and the Android runtime includes a kernel library and a virtual machine. The Android runtime is responsible for scheduling and management of the Android system.

The kernel library includes two parts: One part is a functional function that needs to be invoked by a java language, and the other part is a kernel library of Android.

The application layer and the application framework layer are run in the virtual machine. The virtual machine executes java files at the application layer and the application framework layer as binary files. The virtual machine is used to perform functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and an input service module.

The surface manager is configured to manage a display subsystem, and provide fusion of 2D and 3D layers for a plurality of applications.

The media library supports playback and recording of audio in a plurality of formats, playback and recording of videos in a plurality of formats, and still image files. The media library may support a plurality of audio and video coding formats, for example, MPEG4, H.264, moving picture experts group audio layer III (moving picture experts group audio layer III, MP3), advanced audio coding (advanced audio coding, AAC), adaptive multi-rate (adaptive multi-rate, AMR), joint photographic experts group (joint photo graphic experts group, JPG), and portable network graphics (portable network graphics, PNG).

The three-dimensional graphics processing library is configured to implement three-dimensional graphics drawing, image rendering, composition, layer processing, and the like.

The input service module may include InputReader and InputDispatcher. InputReader is configured to read an input event and report the read event to InputDispatcher, and InputDispatcher allocates the input event.

The kernel layer is a layer between hardware and software. The kernel layer includes at least a sensor driver, a camera driver, a display driver, and the like.

It should be noted that FIG. 4 is a diagram of a structure of a possible electronic device, and FIG. 5 is a diagram of a software architecture of a possible electronic device. Any touchscreen electronic device (electronic device D) shown in FIG. 1 to FIG. 3 may have the structure shown in FIG. 4 and the software structure shown in FIG. 5.

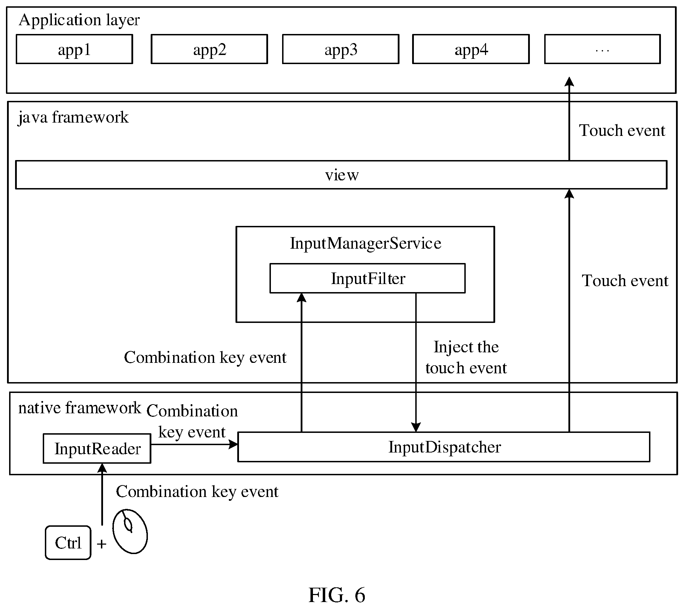

FIG. 6 is a schematic diagram of an interactive event processing process in a first-type interactive scenario according to an embodiment of this application. The processing process shown in FIG. 6 may be applied to the interactive scenario shown in FIG. 1, and the processing process shown in FIG. 6 may be performed by the electronic device D or the electronic device 400.

As shown in FIG. 6, an application layer includes a plurality of applications such as app1, app2, app3, and app4. An application running in the foreground can be referred to as a foreground application. When a user enters a combination key operation of ctrl+scroll by using a keyboard and a mouse that are externally connected to a touchscreen electronic device, a corresponding driver of a kernel layer grabs the combination key event and reports the combination key event to InputReader in a native framework layer, InputReader reads the combination key event and reports the combination key event to InputDispatcher in the native framework layer, and then InputDispatcher can dispatch the combination key event. In the solution of this embodiment of this application, InputDispatcher first dispatches the combination key event to InputFilter in InputManagerService at a java framework layer, InputFilter filters the combination key event before event dispatching and then injects the combination key event into InputDispatcher to form a corresponding touch event, then InputDispatcher dispatches the touch event to a view framework, and then the view framework sends the touch event to the foreground application. The touchscreen electronic device (the electronic device D or the electronic device 400) can respond to the touch event. Specifically, this process is as follows: InputDispatcher dispatches the event to an application process, and the view framework running in the application process further dispatches the event based on a view tree of a current interface layout, to transfer the event to a corresponding application control. Therefore, an interface of the foreground application interface can enable zooming.

In some cases, the native framework layer may be considered as an example of the system library layer shown in FIG. 5, and the java framework layer may be considered as an example of the application framework layer shown in FIG. 5. However, it should be understood that a layering manner of an Android system is not unique, that is, an inter-layer structure division manner shown in FIG. 5 may not be completely used. For example, in some other cases, the native framework layer and the java framework layer may also be collectively referred to as a framework layer.

It should be noted that, if a conventional solution is used, InputDispatcher directly dispatches the combination key event to the view framework, and then the view framework sends the combination key event to the foreground application. However, because the touchscreen electronic device (the electronic device D or the electronic device 400) cannot respond to the combination key event, that is, cannot process the combination key event, the interface of the foreground application cannot enable zooming. Different from this, in the solution of this embodiment of this application, the combination key event is first converted into a touch event, and then the touch event is dispatched to the view framework, thereby implementing a zoom function.

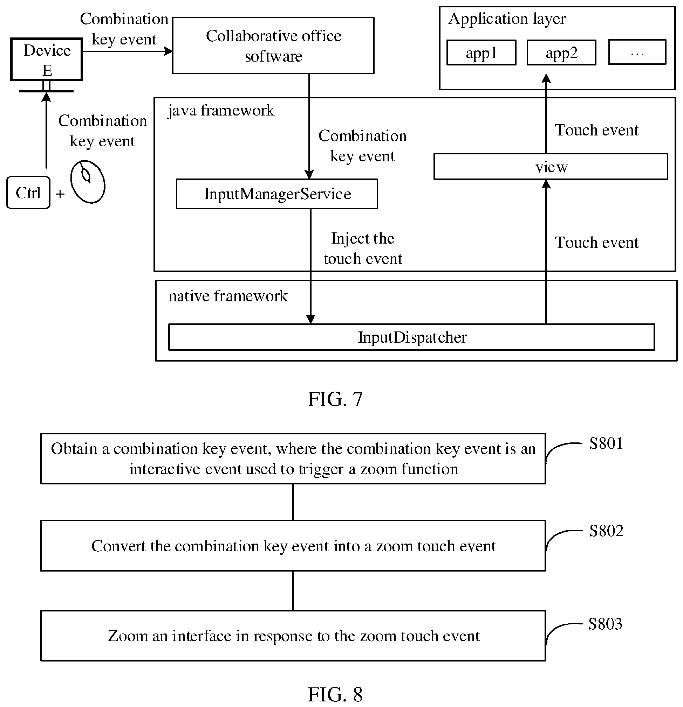

FIG. 7 is a schematic diagram of an interactive event processing process in a second-type interactive scenario according to an embodiment of this application. The processing process shown in FIG. 7 may be applied to the interactive scenario shown in FIG. 2, and the processing process shown in FIG. 7 may be performed by the electronic device D or the electronic device 400.

As shown in FIG. 7, an application layer includes a plurality of applications such as app1 and app2. A device E may be considered as an example of the electronic device E shown in FIG. 2. Subsequently, when a user enters a combination key operation of ctrl+scroll by using a built-in keyboard or an external keyboard and an external mouse of the device E, the device E sends the combination key event through a communication channel between the device E and a touchscreen electronic device (the electronic device D or the electronic device 400), then the combination key event is received by collaborative office software of the touchscreen electronic device, the collaborative office software sends the combination key event to InputManagerService, InputManagerService injects the combination key event into InputDispatcher to form a corresponding touch event, then InputDispatcher dispatches the touch event to a view framework, and then the view framework sends the touch event to a foreground application. Because the touchscreen electronic device (the electronic device D or the electronic device 400) can respond to the touch event, an interface of the foreground application can enable zooming. For a response process of the touch event, refer to related descriptions in FIG. 6. Details are not described again.

It should be noted that, if a conventional solution is used, InputManagerService does not inject the combination key event into InputDispatcher to form the corresponding touch event, but directly sends the combination key event to InputDispatcher, then InputDispatcher dispatches the combination key event to the view framework, and then the view framework sends the combination key event to the foreground application. However, because the touchscreen electronic device (the electronic device D or the electronic device 400) cannot respond to the combination key event, that is, cannot process the combination key event, the interface of the foreground application cannot enable zooming. However, in this embodiment of this application, the combination key event is first converted into a touch event, and then the touch event is dispatched to the view framework, thereby implementing a zoom function.

FIG. 8 is a schematic flowchart of an interactive event processing method according to an embodiment of this application. The method can be applied to the electronic device D or the electronic device 400. The following describes steps in FIG. 8.

S801: Obtain a combination key event, where the combination key event is an interactive event used to trigger a zoom function.

In an implementation, the combination key event may be obtained through a hardware driver or collaborative office software.

In a first-type interactive scenario, step S801 may be generating the combination key event by capturing, by the hardware driver, operations of a control key and a wheel, and reporting the combination key event to InputReader.

In a second-type interactive scenario, step S801 may be obtaining the combination key event by using the collaborative office software. For example, a hardware driver of a projection device may be used to capture the operations of the control key and the wheel to generate the combination key event, then the combination key event is transmitted to a touchscreen electronic device through a communication channel between the projection device and the touchscreen electronic device, and then the touchscreen electronic device may obtain the combination key event by using the collaborative office software.

In an implementation, the combination key event includes an event including a control key (ctrl key) and a wheel, that is, the combination key event is a combination event of a control key event and a mouse scroll event. Optionally, the combination key event may be ctrl+scroll, and ctrl+scroll may include "ctrl+scroll up" and "ctrl+scroll down".

As described above, because the ctrl key is a control key, a controlled device does not generate a corresponding operation after only the ctrl key is pressed. Therefore, ctrl in the combination key event of ctrl+scroll may be considered as a state value of a scroll event, that is, the combination key event of ctrl+scroll may be considered as a scroll event that carries a ctrl state value.

In an actual scenario, when a scroll event occurs and it is determined that currently a ctrl key is pressed, a current event state may be obtained from a current scroll event object motionevent through an interface getMetaState(), and the event state is embodied as an integer (int) type value, where a bit (bit) position 0x1000 represents a ctrl key state, a value 1 of the first bit indicates that the ctrl key is pressed, and a value 0 of the first bit indicates that the ctrl key is not pressed but only the wheel is scrolled.

S802: Convert the combination key event into a zoom touch event.

In an implementation, parameters of the combination key event may be converted into corresponding parameters in the zoom touch event.

Optionally, a touch event of a segment of event may be injected, to convert the combination key event into the zoom touch event. That is, the injection of the touch event may be started after the combination key event is received, and the injection of the touch event is ended after a touch event equivalent to a zoom gesture on a touchscreen can be generated, to generate the zoom touch event.

In the first-type interactive scenario, step S802 may be that InputDispatcher dispatches the combination key event to InputFilter, and InputFilter filters the combination key event before event dispatching and then injects the combination key event into InputDispatcher to form a corresponding touch event.

In the second-type interactive scenario, step S802 may be that InputManagerService injects the combination key event into InputDispatcher to form a corresponding touch event.

For a group of touch events, specific duration is needed. Within the duration, a down (down) event is used as a start, and an up (up) event is used as an end, which may be understood as a time period from pressing to releasing. In this process, a move (move) event may be injected during each preset time period, to generate a group of touch events.

A group of touch events usually includes a pressed position and a distance and a direction of movement (mostly sliding). For example, the two-finger pinching in FIG. 3 may include coordinates of pressing by two fingers on the screen and sliding distances and sliding directions of the two fingers in a pinching process or a distance change between the two fingers. A positive value and a negative value of the distance change respectively correspond to zooming in and zooming out, that is, a change amount of the coordinates of pressing by the two fingers. For example, a two-finger pinching event may be that if it is detected that a change amount of coordinates of pressing in a preset time interval is +Δ, it corresponds to zooming in, and a zooming-in percentage is positively correlated with Δ; and if the change amount is -Δ, it corresponds to zooming out, and a zooming-out percentage is positively correlated with Δ.

For ease of understanding, it may be considered that parameters of the zoom touch event (two-finger pinching event) include a pinching distance and a pinching direction, where the pinching direction corresponds to zooming in or zooming out, and the pinching distance corresponds to a zooming percentage.

The mouse scroll scroll event is a motion event. The event includes coordinate information of a current mouse cursor. Therefore, the coordinate information of the cursor may be corresponded to the sliding distances of the two fingers.

For ease of understanding, it may be considered that parameters of the scroll event include a scrolling direction and a scrolling amount. The scrolling direction includes, for example, up and down. The scrolling amount may be understood as a change amount of a wheel that is pushed to scroll when a user pushes the wheel, for example, the scrolling amount may be represented in units of cells, that is, how many cells the wheel is scrolled up or how many cells the wheel is scrolled down. The scrolling direction corresponds to zooming in or zooming out. In conventional operations, scrolling up usually corresponds to zooming in and scrolling down usually corresponds to zooming out. The scrolling amount corresponds to a zooming percentage.

If it is a pure scroll event, the scrolling direction corresponds to a page turning direction. In conventional operations, scrolling up usually corresponds to page turning up, scrolling down usually corresponds to page turning down, and the scrolling amount corresponds to an amount of page turning up or down. A difference between the pure scroll event and the combination key event of the control key and the wheel lies in that a control key state bit in the scroll event has a different identifier, but the two parameters, namely the scrolling direction and the scrolling amount of the wheel, are not affected. As described above, details are not described again.

Therefore, it can be learned that a mapping relationship between the parameters of the combination key event and the parameters of the zoom touch event may be established, to achieve a purpose of converting the combination key event into the touch event.

The parameters of the zoom touch event include a pinching direction and a pinching distance, and the parameters of the combination key event include a scrolling direction and a scrolling distance. There are two pinching directions that may respectively correspond to zooming in and zooming out, and there are also two scrolling directions that may respectively correspond to zooming in and zooming out. Therefore, the pinching directions and the scrolling directions may be in a one-to-one correspondence. The pinching distance corresponds to a zooming percentage, and the scrolling distance also corresponds to the zooming percentage. Therefore, the pinching distance may correspond to the scrolling distance.

In an implementation, the combination key event is a combination event of a control key event and a mouse scroll event; the parameters of the combination key event include a scrolling direction and a scrolling amount of a wheel; and the parameters of the zoom touch event include a pinching direction and a pinching distance. The converting parameters of the combination key event into corresponding parameters in the zoom touch event may include: converting the scrolling amount into the pinching distance, and converting the scrolling direction into the pinching direction.

In an implementation, the foregoing injection process, that is, the step of converting the combination key event into the zoom touch event may include:
obtaining the scrolling direction and the scrolling amount of the wheel; and
using an injection manner to inject the scroll event to form the zoom touch event, where a zoom identifier (corresponding to the pinching direction) of the zoom touch event corresponds to the scrolling direction, and the zooming percentage (corresponding to the pinching distance) of the zoom touch event corresponds to the scrolling amount. The zoom identifier is used to indicate whether the interactive event is zooming in or zooming out. For example, zooming in and zooming out may be respectively represented by using a positive value and a negative value.

In an example, coordinates of a two-finger pinching start down event respectively correspond to two symmetrical points with a cursor position as a center point, and a distance between the two points on an x axis and a distance between the two points on a y axis each are a preset value. For example, the preset value may be 400 dps. Coordinates of an injected up event are obtained by offsetting start coordinates by 100 dps in each of an x-axis direction and a y-axis direction, and specific coordinate values of offsets of an x coordinate and a y coordinate of each move event are calculated based on time of an event injection process. A zooming-in gesture and a zooming-out gesture are determined based on a direction of the scroll event. In addition, whether a positive value or a negative value is used for coordinate calculation of coordinate points x and y is determined. Coordinates of an injected touch event need to be limited for a screen boundary.

A dp (density-independent pixel) is a length unit for Android development, and 1 dp indicates a 1-pixel length when a pixel density of the screen is resolution of 160.

In an implementation, coordinates of an injected event are limited based on the screen boundary.

In an implementation, step S802 may further include:
determining whether a previous round of conversion of the combination key event is still being performed;
discarding the combination key event when the previous round of conversion of the combination key event is still being performed; or
converting the combination key event into the zoom touch event when the previous round of conversion of the combination key event is not being performed.

In this implementation, accuracy of processing continuously triggered combination key events can be improved.

S803: Zoom an interface in response to the zoom touch event.

Optionally, the zoom touch event may be responded to by using a view, to zoom the interface.

The interface may be an interface of the touchscreen electronic device, or may be a projected interface of the touchscreen electronic device, respectively corresponding to the foregoing two types of interactive scenarios.

In an implementation, the method may further include: determining whether the combination key event is a zoom combination key event; and
when the combination key event is the zoom combination key event, performing the step of converting the combination key event into the zoom touch event; or
when the combination key event is not the zoom combination key event, terminating a processing procedure of the interactive event.

That is, whether the input combination key event is a combination key event corresponding to the zoom function is determined, and when the input combination key event is the combination key event corresponding to the zoom function, step S802 is performed. That is, a determining operation is added to step S802. When an input interactive event is not an expected combination key event, a subsequent operation is not performed, or the steps of converting and responding are continued only when the input interactive event is a correct combination key event. In this implementation, an input of a pure control key event can be shielded, or a pure scroll event is prevented from being mistakenly used as a zoom combination key for making a response.

In an implementation, the method may further include: determining whether a foreground application supports zooming, and when the foreground application supports zooming, performing step S803. That is, a determining operation is added. Because some applications support zooming and some applications do not support zooming, the solution in this embodiment of this application may be performed only for the applications that support zooming. However, it should be understood that the determining action may be performed at any step node before step S803, for example, may be performed before or after step S801, or may be performed before or after step S802. This is not limited. For example, it is assumed that determining whether the foreground application supports zooming is performed before step S801. Steps S801-S803 may not be performed when a determining result is no, and this processing procedure is omitted. If the determining result is yes, steps S801-S803 are performed, to implement zooming under operations of a keyboard and a mouse. It is assumed that determining whether the foreground application supports zooming is performed after step S801 and before step S802. When the determining result is no, steps S802 and S803 may not be performed. If the determining result is yes, steps S802 and S803 continue to be performed, to implement zooming under the operations of the keyboard and the mouse. Examples are no longer listed one by one.

In an example, the determining whether a foreground application supports zooming, and when the foreground application supports zooming, performing step S803 may include:
determining whether the foreground application supports zooming; and
when the foreground application supports zooming, step S803 includes: zooming a running interface of the foreground application in response to the zoom touch event; or
when the foreground application does not support zooming, terminating the processing procedure of the interactive event.

In an example, an application whitelist may be set, and all applications in the whitelist can support the zoom function.

Optionally, the step of determining whether the foreground application supports zooming may be performed by InputManagerService.

Optionally, the determining whether the foreground application supports zooming may include:
comparing information about the foreground application with preconfiguration information of a whitelist application, to determine whether the foreground application is an application in the whitelist application, where the whitelist application includes at least one application that supports the zoom function; and
when the foreground application is an application in the whitelist application, determining that the foreground application supports zooming; or
when the foreground application is not an application in the whitelist application, determining that the foreground application does not support zooming.

In another implementation, the method further includes: discarding the combination key event after the zoom touch event is generated. That is, the combination key event may be discarded after performing of step S802 is completed, and the discarded event does not need to be subsequently processed.

In the method shown in FIG. 8, mainly a combination key event that cannot be responded to is converted into a zoom touch event that can be responded to, and then a response is made, so that an effect of controlling a zoom function of a touchscreen electronic device by using a keyboard and a mouse is achieved. In addition, this solution is easy to implement without a need for excessive modifications.

In this embodiment of this application, that the touchscreen electronic device already has a touch operation corresponding to the zoom function is mainly considered. Therefore, the electronic device may respond to a zoom touch event as long as a zoom combination key event is converted into the zoom touch event. Alternatively, it is understood that a mapping relationship between a key event and a touch event that are of the zoom function is established. Therefore, when a zoom combination key event is input to the electronic device, the electronic device only needs to add a conversion step. First, the zoom combination key event is converted into a zoom touch event, so that processing can be continued according to an original processing procedure of the touch event. Therefore, control of the zoom function of the electronic device is implemented by using a keyboard and a mouse from a user perspective. In this solution, an additional conversion step is added to an existing touch event processing procedure. Therefore, transformation is relatively less difficult and is easy to implement. A hardware structure does not need to be changed, nor does a complex processing procedure need to be redesigned.

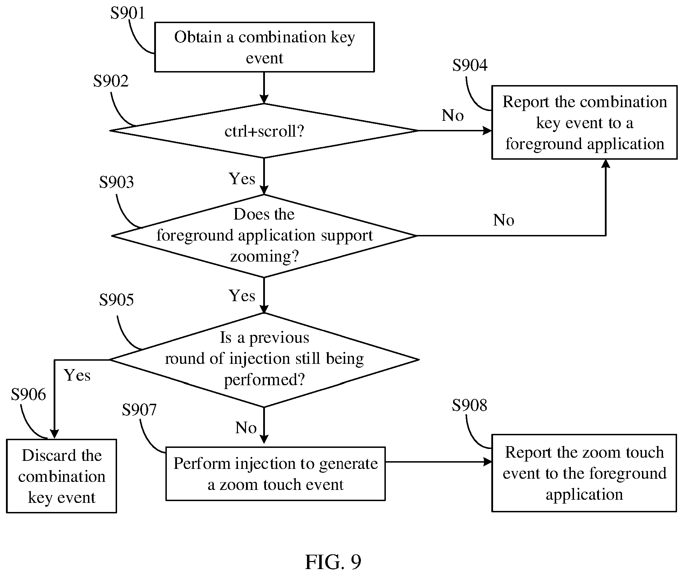

FIG. 9 is a schematic flowchart of another interactive event processing method according to an embodiment of this application. FIG. 9 may be considered as an example of the method shown in FIG. 8.

S901: Obtain a combination key event.

Step S901 may be considered as an example of step S801.

S902: Determine whether the combination key event is a ctrl+scroll event, and when a determining result is yes, perform step S903, or when a determining result is no, perform step S904.

S903: Determine whether a foreground application supports zooming, and when a determining result is yes, perform step S905, or when a determining result is no, perform step S904.

S904: Report the combination key event to the foreground application.

Step S904 may be that InputDispatcher reports the combination key event to a view, and then the view sends the combination key event to the foreground application. Assuming that only a control key event, that is, a ctrl event, is actually obtained in step S901, the ctrl event is directly reported to the foreground application, and a subsequent step of implementing a zoom function is not to be performed. Assuming that only a scroll event is actually obtained in step S901, the scroll event is directly reported to the foreground application, the subsequent step of implementing the zoom function is not to be performed, and the foreground application may perform page turning in response to the scroll event.

Steps S902 and S904 are mainly to pre-determine the combination key event. A subsequent step is continued only when the combination key event is actually a combination key event of the zoom function. Otherwise, the combination key event is directly reported to the foreground application.

Steps S903 and S904 are mainly to pre-determine the foreground application. A subsequent step is continued only when the foreground application supports the zoom function. Otherwise, the combination key event is directly reported to the foreground application.

It should be understood that a sequence of step S902 and step S903 is not limited. Step S903 may alternatively be performed before, after, or during performing of step S901. This is not limited.

S905: Determine whether a previous round of injection is still being performed, and when a determining result is yes, perform step S906, or when a determining result is no, perform step S907.

S906: Discard the combination key event.

S907: Perform injection for a period of time, to generate a zoom touch event.

Step S907 may be considered as an example of step S802.

Steps S905-S907 can mainly implement that when continuous combination key operations are performed, the generated zoom touch event is enabled to be equivalent to an actual two-finger pinching event through each round of injection.

S908: Report the zoom touch event to the foreground application.

Optionally, when performing of step S907 is completed, in addition to step S908, the step of discarding the combination key event may be further performed.

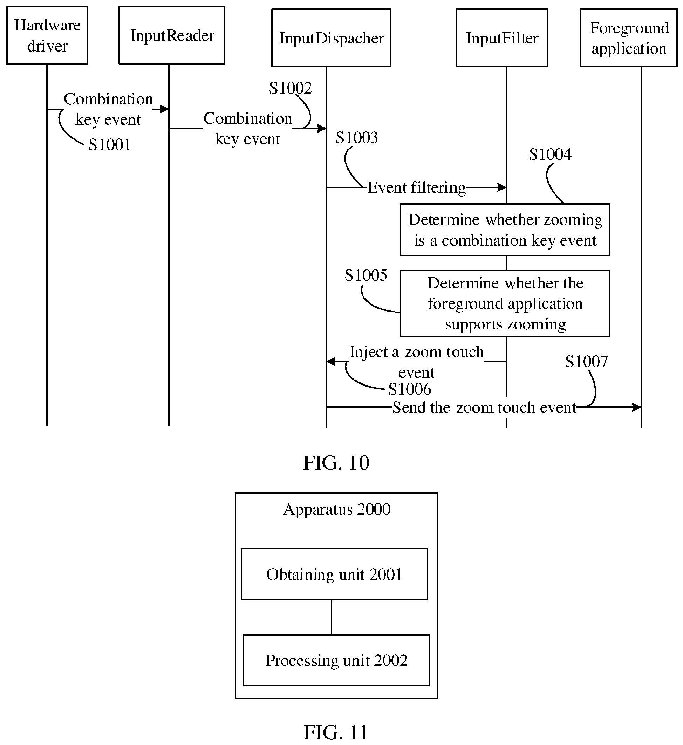

FIG. 10 is a schematic flowchart of still another interactive event processing method according to an embodiment of this application. FIG. 10 may be considered as an example of the method shown in FIG. 8 or FIG. 9.

S1001: A hardware driver reports a combination key event to InputReader.

Step S1001 may be considered as an example of step S801 or S901.

S1002: InputReader reports the combination key event to InputDispatcher.

S1003: InputDispatcher reports the combination key event to InputFilter in InputManagerService, and InputFilter performs filtering before event dispatching.

S1004: InputFilter determines whether the combination key event is a zoom combination key event.

Step S1004 may be considered as an example of S902.

S1005: InputFilter determines whether a foreground application supports zooming.

Step S1005 may be considered as an example of S903.

S1006: InputFilter injects a zoom touch event to InputDispatcher.

Step S1006 may be considered as an example of step S802 or S907.

S1007: InputDispatcher sends the zoom touch event to the foreground application.

Step S1007 may be considered as an example of step S908.

Step S1007 may be that InputDispatcher reports the zoom touch event to a view, and then the view sends the zoom touch event to the foreground application.

It can be learned that the method shown in FIG. 10 is mainly described by using a first-type interactive scenario as an example. In addition, in the method shown in FIG. 10, modifications are made based on a processing framework and a processing procedure of an existing interactive event, and steps S1003-S1006 are added, so that in step S1007, the zoom touch event instead of the combination key event is sent to the foreground, and then the view can respond to the zoom touch event, thereby implementing a zoom function triggered by the combination key event on the whole. It should be understood that persons skilled in the art may also use another suitable processing module or design a separate processing module to implement conversion from the combination key event into the zoom touch event, but more modifications are required than those in FIG. 10. In FIG. 10, the modifications are made based on the existing processing framework and processing procedure. The modifications are small with low development costs, and are more conveniently.

The foregoing mainly describes the methods in the embodiments of this application with reference to the accompanying drawings. It should be understood that, although the steps in the flowcharts in the foregoing embodiments are sequentially displayed, these steps are not necessarily performed sequentially according to the sequences shown in the accompanying drawings. Unless expressly stated in this specification, these steps are not performed in strict sequences, and these steps may be performed in other sequences. In addition, at least a part of the steps in the flowcharts in the foregoing embodiments may include a plurality of steps or a plurality of stages. These steps or stages are not necessarily performed and completed at the same time, but may be performed at different times. These steps or stages are not necessarily performed sequentially, but may be performed in turn or alternately with other steps or at least a part of steps or stages in the other steps. The following describes an apparatus in an embodiment of this application with reference to an accompanying drawing.

FIG. 11 is a schematic diagram of an interactive event processing apparatus according to an embodiment of this application. As shown in FIG. 11, the apparatus 2000 includes an obtaining unit 2001 and a processing unit 2002. The apparatus 2000 may be any one of the foregoing touchscreen electronic devices, such as the electronic device D or the electronic device 400.

The apparatus 2000 can be configured to perform any one of the foregoing interactive event processing methods. For example, the obtaining unit 2001 may be configured to perform step S801, and the processing unit 2002 may be configured to perform steps S802 and S803. For another example, the processing unit 2002 may be further configured to determine whether a combination key event is a combination key event corresponding to a zoom function, and/or may be configured to perform a step of determining whether a foreground application supports the zoom function. For another example, the obtaining unit 2001 may be further configured to perform step S901, and the processing unit 2002 may be further configured to perform steps S902 to S908. For another example, the obtaining unit 2001 may be further configured to perform step S1001, and the processing unit 2002 may be further configured to perform steps S1002 to S1007.

In an implementation, the apparatus 2000 may further include a storage unit, configured to store data such as configuration information of an interactive event and an application that supports the zoom function. The storage unit may be integrated into the processing unit 2002, or may be a unit that is independent of the obtaining unit 2001 and the processing unit 2002.

It should be noted that content such as information interaction or an execution process between the apparatuses/units is based on a same concept as that in the method embodiments of this application. Therefore, for specific functions and technical effects brought by the apparatuses/units, refer to the method embodiment parts. Details are not described herein again.

Persons skilled in the art may clearly understand that, for ease and brevity of description, division of the foregoing functional units and modules is merely used as an example for description. In an actual application, the foregoing functions may be allocated to different functional units and modules based on a requirement, that is, an internal structure of the apparatus is divided into different functional units or modules, to complete all or some of the functions described above. The functional units or modules in the embodiments may be integrated into one processing unit, each unit may exist alone physically, or two or more units are integrated into one unit. The foregoing integrated unit may be implemented in a form of hardware, or may be implemented in a form of a software functional unit. In addition, specific names of the functional units and modules are also used for ease of mutual distinction, and are not used to limit the protection scope of this application. For a specific working process of each of the units and the modules in the foregoing system, refer to a corresponding process in the foregoing method embodiments. Details are not described herein again.

An embodiment of this application further provides an electronic device. The electronic device includes at least one processor, a memory, and a computer program that is stored in the memory and that is capable of running on the at least one processor. The steps in any one of the foregoing methods are implemented when the processor executes the computer program.

An embodiment of this application further provides a computer-readable storage medium. The computer-readable storage medium stores a computer program, and when the computer program is executed by a processor, the steps in the foregoing method embodiments may be implemented.

An embodiment of this application provides a computer program product, when the computer program product runs on a mobile terminal, the mobile terminal is enabled to implement steps in the foregoing method embodiments.

When the integrated unit is implemented in the form of the software functional unit and sold or used as an independent product, the integrated unit may be stored in a computer-readable storage medium. Based on this understanding, all or some of the processes in the methods of the foregoing embodiments may be implemented by a computer program instructing relevant hardware in this application. The computer program may be stored in a computer-readable storage medium. When the computer program is executed by a processor, the steps in the foregoing method embodiments may be implemented. The computer program includes computer program code, and the computer program code may be in a source code form, an object code form, an executable file, some intermediate forms, or the like. The computer-readable medium may include at least any entity or apparatus capable of carrying the computer program code to a photographing apparatus/electronic device, a recording medium, a computer memory, a read-only memory (read-only memory, ROM), a random access memory (random access memory, RAM), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunications signal according to legislation and patent practice.

In the foregoing embodiments, the descriptions of the embodiments have respective focuses. For a part that is not detailed or described in an embodiment, refer to related descriptions in other embodiments.

Persons of ordinary skill in the art may be aware that the units and the algorithm steps in the examples described with reference to the embodiments disclosed in this specification can be implemented by using electronic hardware or a combination of computer software and electronic hardware. Whether these functions are implemented in a hardware or software manner depends on specific applications and design constraints of the technical solutions. Persons skilled in the art may use different methods to implement the described functions for each specific application, but it should not be considered that such an implementation goes beyond the scope of this application.

In the embodiments provided in this application, it should be understood that the disclosed apparatus/network device and method may be implemented in another manner. For example, the described apparatus/network device embodiment is merely an example. For example, division of the modules or units is merely logical function division. In actual implementation, there may be another division manner. For example, a plurality of units or components may be combined or integrated into another system, or some characteristics may be ignored or not performed. In addition, the displayed or discussed mutual coupling, direct coupling, or communication connection may be implemented through some interfaces, and indirect coupling or a communication connection of the apparatuses or units may be in an electrical, mechanical, or another form.

The units described as separate components may or may not be physically separated, and components displayed as units may or may not be physical units, that is, may be located in one place, or may be distributed on a plurality of network units. Some or all of the units may be selected based on actual requirements to achieve the objectives of the solutions in the embodiments.

It should be understood that when being used in this specification and the appended claims of this application, the term "include" indicates presence of a described feature, entirety, step, operation, element, and/or component, but does not rule out presence or addition of one or more other features, entireties, steps, operations, elements, components, and/or sets thereof.

It should also be understood that the term "and/or" used in this specification and the appended claims of this application means any combination and all possible combinations of one or more of listed associated items, and these combinations are included.

As used in this specification and the appended claims of this application, the term "if" may be interpreted according to the context as "when...", "once", "determining in response to", or "detecting in response to". Similarly, the phrase "if it is determined that" or "if [a described condition or event] is detected" may be interpreted according to the context as "once it is determined that", "it is determined that in response to", "once [a described condition or event] is detected", or "[a described condition or event] is detected in response to".

In addition, in the descriptions of this specification and the appended claims of this application, the terms "first", "second", "third", and the like are merely used to distinguish between the descriptions, and cannot be understood as indicating or implying relative importance.

Referring to "one embodiment", "some embodiments", or the like that is described in this specification of this application means that specific features, structures, or characteristics described with reference to one or more embodiments of this application are included in the one or more embodiments of this application. Therefore, statements such as "in one embodiment", "in some embodiments", "in some other embodiments" that appear in different parts of this application do not necessarily refer to same embodiments, but mean "one or more but not all embodiments" unless otherwise specifically emphasized. The terms "include", "comprise", "have", and variants thereof all mean "include but are not limited to", unless otherwise specifically emphasized in another manner.

The foregoing embodiments are merely used to describe the technical solutions of this application, instead of limiting the technical solutions of this application. Although this application is described in detail with reference to the foregoing embodiments, persons of ordinary skill in the art should understand that they may still modify the technical solutions described in the foregoing embodiments, without departing from the scope of the appended claims.

## Claims

1. An interactive event processing method, applied to a mobile phone, comprising:
obtaining a combination key event sent by a computer, wherein the combination key event is an interactive event used to trigger a zoom function (S801, S901), wherein the mobile phone is projected onto the computer, the computer is connected to a keyboard and a mouse, and when the computer receives a key and mouse operation acting on the keyboard and the mouse, the key combination event is sent to the mobile phone;
converting the combination key event into a zoom touch event (S802); and
zooming an interface in response to the zoom touch event (S803),
wherein the mobile phone is a touchscreen mobile phone,
wherein the converting the combination key event into a zoom touch event comprises (S802):
converting parameters of the combination key event into corresponding parameters in the zoom touch event,
wherein the combination key event is a combination event of a control key event and a mouse scroll event; the parameters of the combination key event comprise a scrolling direction and a scrolling amount of a wheel; and the parameters of the zoom touch event comprise a pinching direction and a pinching distance; and
the converting parameters of the combination key event into corresponding parameters in the zoom touch event comprises:
converting the scrolling amount into the pinching distance, and converting the scrolling direction into the pinching direction.

2. The method according to claim 1, further comprising:
determining whether the combination key event is a zoom combination key event (S902); and
when the combination key event is the zoom combination key event, performing the step of converting the combination key event into the zoom touch event; or
when the combination key event is not the zoom combination key event, terminating a processing procedure of the interactive event.

3. The method according to any one of claims 1 or 2, wherein the converting the combination key event into a zoom touch event further comprises:
determining whether a previous round of conversion of the combination key event is still being performed (S905); and
discarding the combination key event when the previous round of conversion of the combination key event is still being performed (S906); or
converting the combination key event into the zoom touch event when the previous round of conversion of the combination key event is not being performed.

4. The method according to any one of claims 1 to 3, wherein the obtaining a combination key event, wherein the combination key event is an interactive event used to trigger a zoom function comprises:
obtaining the combination key event by using a hardware driver or collaborative office software.

5. The method according to any one of claims 1 to 4, further comprising:
determining whether a foreground application supports zooming (S903); and
when the foreground application supports zooming, the zooming an interface in response to the zoom touch event comprises: zooming a running interface of the foreground application in response to the zoom touch event; or
when the foreground application does not support zooming, terminating the processing procedure of the interactive event.

6. The method according to claim 5, wherein the determining whether a foreground application supports zooming (S903) comprises:
comparing information about the foreground application with preconfiguration information of a whitelist application, to determine whether the foreground application is an application in the whitelist application, wherein the whitelist application comprises at least one application that supports the zoom function; and
when the foreground application is an application in the whitelist application, determining that the foreground application supports zooming; or
when the foreground application is not an application in the whitelist application, determining that the foreground application does not support zooming.

7. The method according to any one of claims 1 to 6, further comprising:
discarding the combination key event after the zoom touch event is generated.

8. An electronic device (400), comprising:
one or more processors (410);
one or more memories (421); and
a module at which a plurality of applications are installed,
wherein the electronic device (400) is a touchscreen electronic device,
wherein
the memory (421) stores one or more programs, and when the one or more programs are executed by the processor (410), the electronic device (400) is enabled to perform the following steps:
obtaining a combination key event sent by a computer, wherein the combination key event is an interactive event used to trigger a zoom function (S801, S901), wherein the mobile phone is projected onto the computer, the computer is connected to a keyboard and a mouse, and when the computer receives a key and mouse operation acting on the keyboard and the mouse, the key combination event is sent to the mobile phone;
converting the combination key event into a zoom touch event (S802); and
zooming an interface in response to the zoom touch event (S803),
wherein the converting the combination key event into a zoom touch event comprises (S802):
converting parameters of the combination key event into corresponding parameters in the zoom touch event,
wherein the combination key event is a combination event of a control key event and a mouse scroll event; the parameters of the combination key event comprise a scrolling direction and a scrolling amount of a wheel; and the parameters of the zoom touch event comprise a pinching direction and a pinching distance; and
the converting parameters of the combination key event into corresponding parameters in the zoom touch event comprises:
converting the scrolling amount into the pinching distance, and converting the scrolling direction into the pinching direction.

9. A computer storage medium, comprising a computer program, which when executed by a processor (410), cause the processor (410) to perform operations comprising:
obtaining a combination key event sent by a computer, wherein the combination key event is an interactive event used to trigger a zoom function (S801, S901), wherein the mobile phone is projected onto the computer, the computer is connected to a keyboard and a mouse, and when the computer receives a key and mouse operation acting on the keyboard and the mouse, the key combination event is sent to the mobile phone;
converting the combination key event into a zoom touch event (S802); and
zooming an interface in response to the zoom touch event (S803),
wherein the converting the combination key event into a zoom touch event comprises (S802):
converting parameters of the combination key event into corresponding parameters in the zoom touch event,
wherein the combination key event is a combination event of a control key event and a mouse scroll event; the parameters of the combination key event comprise a scrolling direction and a scrolling amount of a wheel; and the parameters of the zoom touch event comprise a pinching direction and a pinching distance; and
the converting parameters of the combination key event into corresponding parameters in the zoom touch event comprises:
converting the scrolling amount into the pinching distance, and converting the scrolling direction into the pinching direction.

## Patentansprüche

1. Interaktives Ereignisverarbeitungsverfahren, angewendet auf ein Mobiltelefon, umfassend:
Ermitteln eines von einem Computer gesendeten Tastenkombinationsereignisses, wobei das Tastenkombinationsereignis ein interaktives Ereignis ist, das zum Auslösen einer Zoom-Funktion verwendet wird (S801, S901), wobei das Mobiltelefon auf den Computer projiziert wird, der Computer mit einer Tastatur und einer Maus verbunden ist und das Tastenkombinationsereignis an das Mobiltelefon gesendet wird, wenn der Computer eine Tasten- und Mausbetätigung empfängt, die auf die Tastatur und die Maus einwirkt;
Umwandeln des Tastenkombinationsereignisses in ein Zoom-Berührungsereignis (S802); und
Zoomen einer Schnittstelle als Reaktion auf das Zoom-Berührungsereignis (S803),
wobei das Mobiltelefon ein Touchscreen-Mobiltelefon ist,
wobei das Umwandeln des Tastenkombinationsereignisses in ein Zoom-Berührungsereignis umfasst (S802):
Umwandeln von Parametern des Tastenkombinationsereignisses in entsprechende Parameter im Zoom-Berührungsereignis,
wobei das Tastenkombinationsereignis ein Kombinationsereignis aus einem Steuertastenereignis und einem Mausrad-Scrollereignis ist; wobei die Parameter des Tastenkombinationsereignisses eine Scrollrichtung und einen Scrollbetrag eines Rads umfassen; und wobei die Parameter des Zoom-Berührungsereignisses eine Pinch-Richtung und einen Pinch-Abstand umfassen; und
wobei das Umwandeln von Parametern des Tastenkombinationsereignisses in entsprechende Parameter im Zoom-Berührungsereignis umfasst:
Umwandeln des Scrollbetrags in den Pinch-Abstand und Umwandeln der Scrollrichtung in die Pinch-Richtung.

2. Verfahren nach Anspruch 1, ferner umfassend:
Bestimmen, ob das Tastenkombinationsereignis ein Zoom-Tastenkombinationsereignis ist (S902); und
wenn das Tastenkombinationsereignis das Zoom-Tastenkombinationsereignis ist, Durchführen des Schritts des Umwandelns des Tastenkombinationsereignisses in das Zoom-Berührungsereignis; oder
wenn das Tastenkombinationsereignis nicht das Zoom-Tastenkombinationsereignis ist, Beenden eines Verarbeitungsvorgangs des interaktiven Ereignisses.

3. Verfahren nach einem der Ansprüche 1 oder 2, wobei das Umwandeln des Tastenkombinationsereignisses in ein Zoom-Berührungsereignis ferner umfasst:
Bestimmen, ob eine vorherige Runde der Umwandlung des Tastenkombinationsereignisses noch ausgeführt wird (S905); und
Verwerfen des Tastenkombinationsereignisses, wenn die vorherige Runde der Umwandlung des Tastenkombinationsereignisses noch ausgeführt wird (S906); oder
Umwandeln des Tastenkombinationsereignisses in das Zoom-Berührungsereignis, wenn die vorherige Runde der Umwandlung des Tastenkombinationsereignisses nicht ausgeführt wird.

4. Verfahren nach einem der Ansprüche 1 bis 3, wobei das Erhalten eines Kombinationstastenereignisses, wobei das Kombinationstastenereignis ein interaktives Ereignis ist, das zum Auslösen einer Zoom-Funktion verwendet wird, umfasst:
Erhalten des Kombinationstastenereignisses unter Verwendung eines Hardwaretreibers oder einer kollaborativen Bürosoftware.

5. Verfahren nach einem der Ansprüche 1 bis 4, ferner umfassend:
Bestimmen, ob eine Vordergrundanwendung das Zoomen unterstützt (S903); und
wenn die Vordergrundanwendung das Zoomen unterstützt, umfasst das Zoomen einer Schnittstelle als Reaktion auf das Zoom-Berührungsereignis: Zoomen einer laufenden Schnittstelle der Vordergrundanwendung als Reaktion auf das Zoom-Berührungsereignis; oder
wenn die Vordergrundanwendung das Zoomen nicht unterstützt, Beenden des Verarbeitungsvorgangs des interaktiven Ereignisses.

6. Verfahren nach Anspruch 5, wobei das Bestimmen, ob eine Vordergrundanwendung das Zoomen unterstützt (S903), umfasst:
Vergleichen von Informationen über die Vordergrundanwendung mit Vorkonfigurationsinformationen einer Whitelist-Anwendung, um zu bestimmen, ob die Vordergrundanwendung eine Anwendung in der Whitelist-Anwendung ist, wobei die Whitelist-Anwendung mindestens eine Anwendung umfasst, die die Zoom-Funktion unterstützt; und
wenn die Vordergrundanwendung eine Anwendung in der Whitelist-Anwendung ist, Bestimmen, dass die Vordergrundanwendung das Zoomen unterstützt; oder
wenn die Vordergrundanwendung keine Anwendung in der Whitelist-Anwendung ist, Bestimmen, dass die Vordergrundanwendung das Zoomen nicht unterstützt.

7. Verfahren nach einem der Ansprüche 1 bis 6, ferner umfassend:
Verwerfen des Kombinationstastenereignisses, nachdem das Zoom-Berührungsereignis erzeugt wurde.

8. Elektronische Vorrichtung (400), umfassend:
einen oder mehrere Prozessoren (410);
einen oder mehrere Speicher (421); und
ein Modul, auf dem eine Vielzahl von Anwendungen installiert sind,
wobei die elektronische Vorrichtung (400) eine elektronische Touchscreen-Vorrichtung ist,
wobei
der Speicher (421) ein oder mehrere Programme speichert, und wenn das eine oder die mehreren Programme durch den Prozessor (410) ausgeführt werden, die elektronische Vorrichtung (400) dazu befähigt ist, die folgenden Schritte durchzuführen:
Erhalten eines von einem Computer gesendeten Tastenkombinationsereignisses, wobei das Tastenkombinationsereignis ein interaktives Ereignis ist, das dazu verwendet wird, eine Zoomfunktion auszulösen (S801, S901), wobei das Mobiltelefon auf den Computer projiziert wird, der Computer mit einer Tastatur und einer Maus verbunden ist und, wenn der Computer eine Tasten- und Mausoperation empfängt, die auf die Tastatur und die Maus einwirkt, das Tastenkombinationsereignis an das Mobiltelefon gesendet wird;
Umwandeln des Tastenkombinationsereignisses in ein Zoom-Berührungsereignis (S802); und
Zoomen einer Schnittstelle als Reaktion auf das Zoom-Berührungsereignis (S803),
wobei das Umwandeln des Tastenkombinationsereignisses in ein Zoom-Berührungsereignis Folgendes umfasst (S802):
Umwandeln von Parametern des Tastenkombinationsereignisses in entsprechende Parameter in dem Zoom-Berührungsereignis,
wobei das Tastenkombinationsereignis ein Kombinationsereignis aus einem Steuerungstastenereignis und einem Maus-Scroll-Ereignis ist; die Parameter des Tastenkombinationsereignisses eine Scrollrichtung und einen Scrollbetrag eines Rades umfassen; und die Parameter des Zoom-Berührungsereignisses eine Pinch-Richtung und einen Pinch-Abstand umfassen; und
das Umwandeln von Parametern des Tastenkombinationsereignisses in entsprechende Parameter in dem Zoom-Berührungsereignis umfasst:
Umwandeln des Scrollbetrags in den Pinch-Abstand und Umwandeln der Scrollrichtung in die Pinch-Richtung.

9. Ein Computerspeichermedium, das ein Computerprogramm umfasst, das bei Ausführung durch einen Prozessor (410) bewirkt, dass der Prozessor (410) Operationen durchführt, die Folgendes umfassen:
Erhalten eines von einem Computer gesendeten Tastenkombinationsereignisses, wobei das Tastenkombinationsereignis ein interaktives Ereignis ist, das dazu verwendet wird, eine Zoomfunktion auszulösen (S801, S901), wobei das Mobiltelefon auf den Computer projiziert wird, der Computer mit einer Tastatur und einer Maus verbunden ist und, wenn der Computer eine Tasten- und Mausoperation empfängt, die auf die Tastatur und die Maus einwirkt, das Tastenkombinationsereignis an das Mobiltelefon gesendet wird;
Umwandeln des Tastenkombinationsereignisses in ein Zoom-Berührungsereignis (S802); und
Zoomen einer Schnittstelle als Reaktion auf das Zoom-Berührungsereignis (S803),
wobei das Umwandeln des Tastenkombinationsereignisses in ein Zoom-Berührungsereignis Folgendes umfasst (S802):
Umwandeln von Parametern des Tastenkombinationsereignisses in entsprechende Parameter in dem Zoom-Berührungsereignis,
wobei das Tastenkombinationsereignis ein Kombinationsereignis aus einem Steuerungstastenereignis und einem Maus-Scroll-Ereignis ist; die Parameter des Tastenkombinationsereignisses eine Scrollrichtung und einen Scrollbetrag eines Rades umfassen; und die Parameter des Zoom-Berührungsereignisses eine Pinch-Richtung und einen Pinch-Abstand umfassen; und
Die Umwandlung der Parameter des Tastenkombinationsereignisses in entsprechende Parameter im Zoom-Berührungsereignis umfasst:
Umwandlung des Scrollbetrags in den Pinch-Abstand und Umwandlung der Scrollrichtung in die Pinch-Richtung.

## Revendications

1. Procédé de traitement d'événement interactif, appliqué à un téléphone mobile, comprenant :
l'obtention d'un événement de touche de combinaison envoyé par un ordinateur, dans lequel l'événement de touche de combinaison est un événement interactif utilisé pour déclencher une fonction de zoom (S801, S901), dans lequel le téléphone mobile est projeté sur l'ordinateur, l'ordinateur est connecté à un clavier et à une souris, et lorsque l'ordinateur reçoit une opération de touche et de souris agissant sur le clavier et la souris, l'événement de combinaison de touches est envoyé au téléphone mobile ;
la conversion de l'événement de touche de combinaison en un événement tactile de zoom (S802) ; et
le zoom d'une interface en réponse à l'événement tactile de zoom (S803),
dans lequel le téléphone mobile est un téléphone mobile à écran tactile,
dans lequel la conversion de l'événement de touche de combinaison en un événement tactile de zoom comprend (S802) :
la conversion de paramètres de l'événement de touche de combinaison en paramètres correspondants dans l'événement tactile de zoom,
dans lequel l'événement de touche de combinaison est un événement de combinaison d'un événement de touche de contrôle et d'un événement de défilement de souris ; les paramètres de l'événement de touche de combinaison comprennent une direction de défilement et une quantité de défilement d'une roulette ; et les paramètres de l'événement tactile de zoom comprennent une direction de pincement et une distance de pincement ; et
la conversion de paramètres de l'événement de touche de combinaison en paramètres correspondants dans l'événement tactile de zoom comprend :
la conversion de la quantité de défilement en distance de pincement, et la conversion de la direction de défilement en direction de pincement.

2. Procédé selon la revendication 1, comprenant en outre :
la détermination si l'événement de touche de combinaison est un événement de touche de combinaison de zoom (S902) ; et
lorsque l'événement de touche de combinaison est l'événement de touche de combinaison de zoom, l'exécution de l'étape de conversion de l'événement de touche de combinaison en événement tactile de zoom ; ou
lorsque l'événement de touche de combinaison n'est pas l'événement de touche de combinaison de zoom, la terminaison d'une procédure de traitement de l'événement interactif.

3. Procédé selon l'une quelconque des revendications 1 ou 2, dans lequel la conversion de l'événement de touche de combinaison en un événement tactile de zoom comprend en outre :
la détermination si un cycle précédent de conversion de l'événement de touche de combinaison est toujours en cours d'exécution (S905) ; et
le rejet de l'événement de touche de combinaison lorsque le cycle précédent de conversion de l'événement de touche de combinaison est toujours en cours d'exécution (S906) ; ou
la conversion de l'événement de touche de combinaison en événement tactile de zoom lorsque le cycle précédent de conversion de l'événement de touche de combinaison n'est pas en cours d'exécution.

4. Procédé selon l'une quelconque des revendications 1 à 3, dans lequel l'obtention d'un événement de touche de combinaison, dans lequel l'événement de touche de combinaison est un événement interactif utilisé pour déclencher une fonction de zoom, comprend :
l'obtention de l'événement de touche de combinaison en utilisant un pilote matériel ou un logiciel de bureau collaboratif.

5. Procédé selon l'une quelconque des revendications 1 à 4, comprenant en outre :
la détermination si une application au premier plan prend en charge le zoom (S903) ; et
lorsque l'application au premier plan prend en charge le zoom, le zoom d'une interface en réponse à l'événement tactile de zoom comprend : le zoom d'une interface d'exécution de l'application au premier plan en réponse à l'événement tactile de zoom ; ou
lorsque l'application au premier plan ne prend pas en charge le zoom, la terminaison de la procédure de traitement de l'événement interactif.

6. Procédé selon la revendication 5, dans lequel la détermination si une application au premier plan prend en charge le zoom (S903) comprend :
la comparaison des informations concernant l'application au premier plan avec des informations de préconfiguration d'une application de liste blanche, afin de déterminer si l'application au premier plan est une application dans la liste blanche, dans lequel l'application de liste blanche comprend au moins une application qui prend en charge la fonction de zoom ; et
lorsque l'application au premier plan est une application dans la liste blanche, la détermination que l'application au premier plan prend en charge le zoom ; ou
lorsque l'application au premier plan n'est pas une application dans la liste blanche, la détermination que l'application au premier plan ne prend pas en charge le zoom.

7. Procédé selon l'une quelconque des revendications 1 à 6, comprenant en outre :
l'abandon de l'événement de touche de combinaison après que l'événement tactile de zoom est généré.

8. Dispositif électronique (400), comprenant :
un ou plusieurs processeurs (410) ;
une ou plusieurs mémoires (421) ; et
un module sur lequel une pluralité d'applications sont installées,
dans lequel le dispositif électronique (400) est un dispositif électronique à écran tactile,
dans lequel
la mémoire (421) stocke un ou plusieurs programmes, et lorsque le ou les programmes sont exécutés par le processeur (410), le dispositif électronique (400) est activé pour effectuer les étapes suivantes :
obtenir un événement de touche combinée envoyé par un ordinateur, dans lequel l'événement de touche combinée est un événement interactif utilisé pour déclencher une fonction de zoom (S801, S901), dans lequel le téléphone mobile est projeté sur l'ordinateur, l'ordinateur est connecté à un clavier et à une souris, et lorsque l'ordinateur reçoit une opération de touche et de souris agissant sur le clavier et la souris, l'événement de combinaison de touches est envoyé au téléphone mobile ;
convertir l'événement de touche combinée en un événement tactile de zoom (S802) ; et
zoomer une interface en réponse à l'événement tactile de zoom (S803),
dans lequel la conversion de l'événement de touche combinée en un événement tactile de zoom comprend (S802) :
la conversion des paramètres de l'événement de touche combinée en paramètres correspondants dans l'événement tactile de zoom,
dans lequel l'événement de touche combinée est un événement de combinaison d'un événement de touche de contrôle et d'un événement de défilement de souris ; les paramètres de l'événement de touche combinée comprennent une direction de défilement et une quantité de défilement d'une molette ; et les paramètres de l'événement tactile de zoom comprennent une direction de pincement et une distance de pincement ; et
la conversion des paramètres de l'événement de touche combinée en paramètres correspondants dans l'événement tactile de zoom comprend :
la conversion de la quantité de défilement en distance de pincement, et la conversion de la direction de défilement en direction de pincement.

9. Support de stockage informatique, comprenant un programme informatique qui, lorsqu'il est exécuté par un processeur (410), amène le processeur (410) à effectuer des opérations comprenant :
obtenir un événement de touche combinée envoyé par un ordinateur, dans lequel l'événement de touche combinée est un événement interactif utilisé pour déclencher une fonction de zoom (S801, S901), dans lequel le téléphone mobile est projeté sur l'ordinateur, l'ordinateur est connecté à un clavier et à une souris, et lorsque l'ordinateur reçoit une opération de touche et de souris agissant sur le clavier et la souris, l'événement de combinaison de touches est envoyé au téléphone mobile ;
convertir l'événement de touche combinée en un événement tactile de zoom (S802) ; et
zoomer une interface en réponse à l'événement tactile de zoom (S803),
dans lequel la conversion de l'événement de touche combinée en un événement tactile de zoom comprend (S802) :
la conversion des paramètres de l'événement de touche combinée en paramètres correspondants dans l'événement tactile de zoom,
dans lequel l'événement de touche combinée est un événement de combinaison d'un événement de touche de contrôle et d'un événement de défilement de souris ; les paramètres de l'événement de touche combinée comprennent une direction de défilement et une quantité de défilement d'une molette ; et les paramètres de l'événement tactile de zoom comprennent une direction de pincement et une distance de pincement ; et
la conversion des paramètres de l'événement de touche de combinaison en paramètres correspondants dans l'événement tactile de zoom comprend :
convertir la quantité de défilement en distance de pincement, et convertir la direction de défilement en direction de pincement.
